# EUROPÄISCHE PATENTSCHRIFT

(11) **EP 2 924 521 B1**
(45) Veröffentlichungstag und Bekanntmachung des Hinweises auf die Patenterteilung: **03.06.2020**
(21) Anmeldenummer: 14162017.9
(22) Anmeldetag: 27.03.2014
(51) Int. Cl.: G05B 19/042

(54) **Verteiltes Steuerungssystem mit Namensgebung für Peripheriemodule durch Benutzer**
Distributed control system with naming of peripheral modules by the users
Système de commande réparti avec saisie du nom pour les modules périphériques par l'utilisateur

(43) Veröffentlichungstag der Anmeldung: 30.09.2015
(73) Patentinhaber: Siemens Aktiengesellschaft, 80333 München (DE)
(72) Erfinder: Stöppler, Guido, 90419 Nürnberg (DE); Weikert, Andre, 90587 Obermichelbach (DE)

(56) Entgegenhaltungen:
- EP-A1- 2 015 536
- WO-A1-2005/015330
- WO-A1-2006/053816
- WO-A1-2008/145326
- WO-A1-2009/089864
- FR-A1- 2 841 016

## Beschreibung

Die vorliegende Erfindung betrifft ein Betriebsverfahren für ein verteiltes Steuerungssystem,
- wobei das Steuerungssystem eine Mehrzahl von als Sensormodule ausgebildeten Peripheriemodulen und eine Mehrzahl von als Motormodule ausgebildeten Peripheriemodulen umfasst,
- wobei die Peripheriemodule über auf den Peripheriemodulen angeordnete einheitlich vorkonfektionierte Schnittstellen direkt oder indirekt über ein Verbindungsnetzwerk mit einer Steuereinrichtung verbunden sind,
- wobei die Steuereinrichtung in einem Normalbetrieb des Steuerungssystems von den als Sensormodule ausgebildeten Peripheriemodulen über die jeweilige vorkonfektionierte Schnittstelle des jeweiligen Peripheriemoduls Eingangsgrößen entgegennimmt, die Eingangsgrößen der jeweiligen Steuerungsaufgabe zuordnet, in Abhängigkeit von den der jeweiligen Steuerungsaufgabe zugeordneten Eingangsgrößen durch Abarbeitung der jeweiligen Steuerungsaufgabe jeweilige Ausgangsgrößen ermittelt und die ermittelten jeweiligen Ausgangsgrößen an mindestens ein der jeweiligen Steuerungsaufgabe zugeordnetes, als Motormodul ausgebildetes Peripheriemodul über die jeweilige vorkonfektionierte Schnittstelle des jeweiligen Peripheriemoduls übermittelt.

Die vorliegende Erfindung betrifft weiterhin ein Peripheriemodul für ein verteiltes Steuerungssystem,
- wobei das Peripheriemodul als Sensormodul oder als Motormodul ausgebildet ist,
- wobei auf dem Peripheriemodul eine vorkonfektionierte Schnittstelle angeordnet ist, über die das Peripheriemodul direkt oder indirekt mit einer Steuereinrichtung verbindbar ist,
- wobei das Peripheriemodul derart ausgebildet ist, dass es in einem Normalbetrieb des Steuerungssystems über die vorkonfektionierte Schnittstelle Eingangsgrößen an die Steuereinrichtung des Steuerungssystems übermittelt, falls es als Sensormodul ausgebildet ist, und über die vorkonfektionierte Schnittstelle von der Steuereinrichtung Ausgangsgrößen entgegennimmt, falls es als Motormodul ausgebildet ist.

Die vorliegende Erfindung betrifft weiterhin ein Programmiergerät für ein Peripheriemodul eines verteilten Steuerungssystems, das als Sensormodul oder als Motormodul ausgebildet ist,
- wobei auf dem Programmiergerät eine vorkonfektionierte Schnittstelle angeordnet ist, über welche das Programmiergerät mittels eines Verbindungskabels mit einer korrespondierenden Schnittstelle des Peripheriemoduls verbindbar ist,
- wobei das Programmiergerät eine Eingabeeinrichtung aufweist, mittels derer dem Programmiergerät von einem Benutzer des Programmiergeräts ein String vorgebbar ist,
- wobei das Programmiergerät eine Ausgabeeinrichtung aufweist, mittels derer der dem Programmiergerät vorgegebene String an den Benutzer ausgebbar ist.

In der Vergangenheit waren bei numerischen Steuerungen und Bewegungssteuerungen alle wesentlichen achsspezifischen Kundenschnittstellen wie beispielsweise die Schnittstellen für ein Motormesssystem und ein direktes Messsystem auf einer der jeweiligen Achse zugeordneten Baugruppe (sogenannter Reglereinschub) angeordnet. Diese Vorgehensweise bietet dem Hersteller der Maschine, also dem Maschinenbauer, eine gute Übersichtlichkeit und damit Handhabbarkeit. Auch der Schaltschrankbauer weiß ohne weiteres, welche Messsysteme er mit welchem Port des Reglereinschubs verbinden muss. Die Schnittstellen sind also räumlich lokal beim Reglereinschub angeordnet. Eine weitergehende frei programmierte Zuordnung während der Inbetriebnahme ist nicht erforderlich.

In jüngerer Zeit wurden jedoch mehr und mehr verteilte Steuerungssysteme entwickelt. Bei einem verteilten Steuerungssystem ist anstelle einzelner Reglereinschübe eine zentrale Steuereinrichtung vorhanden, welche mehrere Achsen gleichzeitig regelt, beispielsweise sechs Achsen oder acht Achsen. Funktionen wie beispielsweise die Ansteuerung eines Elektromotors, das Erfassen analoger Sensorsignale oder das Erfassen digitaler Eingangssignale und das Ausgeben digitaler Ausgangssignale werden in sogenannten schlanken Modulen realisiert, die über funktionsabstrahierte Telegramme und ein Verbindungsnetzwerk miteinander kommunizieren. Das Verbindungsnetzwerk kann beispielsweise auf einem echtzeitfähigen Ethernet basieren. Ein Beispiel für ein verteiltes Steuerungssystem, das auf dieser Technologie basiert, ist das DRIVE-CLiQ-System der Siemens AG. Noch ein Beispiel auf ein verteiltes Steuerungssystem ist durch WO 2006/053816 bekannt.

Während der Inbetriebnahme wird bei einem derartigen verteilten Steuerungssystem - in der Regel mit Ausnahme der zentralen Steuereinrichtung - den einzelnen Komponenten (= Peripheriemodulen) eine jeweilige Identifikation zugeordnet. Die Regelung der Achsen (Steuerungsaufgaben im Sinne der vorliegenden Erfindung) selbst ist in der Steuereinrichtung realisiert. Innerhalb der Steuereinrichtung muss festgelegt werden, welche erfassten Eingangsgrößen - beispielsweise eine Motordrehzahl oder eine Istlage - für welche Regelung relevant ist. Ebenso muss innerhalb der Steuereinrichtung festgelegt werden, auf welchen Motor und damit auf welches Motormodul eine im Rahmen einer bestimmten Regelung ermittelte Ausgangsgröße wirkt. Bei den so genannten Motormesssystemen ist die automatische Zuordnung bereits im Stand der Technik realisierbar, weil schlichtweg angenommen wird, dass das jeweilige Motormesssystem direkt über eine vorbestimmte vorkonfektionierte Schnittstelle, die auf dem korrespondierenden Motormodul angeordnet ist und die in der Regel auf dem Motormodul auch als solche bezeichnet und markiert ist, angeschlossen ist. Bei anderen Messsystemen - insbesondere direkten Messsystemen - ist diese Vorgehensweise nicht praktikabel. Hier muss auf Seiten der Steuereinrichtung eine Zuordnung vorgenommen werden. Diese Aufgabe wird umso komplexer und fehlerträchtiger, je größer die Gesamtzahl an Peripheriemodulen ist.

Prinzipiell besteht die Möglichkeit, die einzelnen Motormodule mit hinreichend vielen identischen Ports (= vorkonfektionierten Schnittstellen zu versehen, so dass alle Systeme, welche Eingangssignale für ein bestimmtes Motormodul liefern, an dieses Motormodul angesteckt werden könnten. Diese Vorgehensweise würde jedoch erhebliche Kosten verursachen.

Im Stand der Technik ist bekannt, in einem Remanentspeicher eines jeweiligen Peripheriemoduls einen Code zu hinterlegen, der pro Peripheriemodul nur einmalig vergeben wird. Auch technisch und funktional völlig baugleiche Peripheriemodule würden also voneinander verschiedene Codes aufweisen, so dass sie voneinander unterscheidbar sind. Dieser Code wird jedoch vom Hersteller des jeweiligen Peripheriemoduls bei der Herstellung des jeweiligen Peripheriemoduls im Remanentspeicher hinterlegt. Der Code kann daher keinerlei auf die spätere Anwendung bezogene Identifikation sein. Im Ergebnis besteht für den Benutzer daher zwar die Möglichkeit, einen Code zu erhalten. Es ist für den Benutzer jedoch sehr mühselig, einen derartigen Code - beispielsweise 127XY09FAB00001 - intellektuell einer bestimmten Funktionalität zuzuordnen, beispielsweise im Falle eines Sensormoduls die Funktionalität "direktes Messsystem für Achse 3" oder im Falle eines Motormoduls die Funktionalität "Stromsteller für Achse 3". Stattdessen ist der Code eine einfache Zeichenkette, welcher der Benutzer nicht ohne weiteres eine sinnvolle Bedeutung entnehmen kann. Diese Vorgehensweise wird daher nicht ergriffen.

Es ist natürlich möglich, eine Zuordnungstabelle zu erstellen, mittels derer dem Code eine bestimmte Funktionalität zugeordnet wird. Dies verlagert das Problem jedoch nur von einer Ebene in eine andere Ebene, nämlich die Erstellung der Zuordnungstabelle. Das Problem als solches bleibt bestehen.

Die Aufgabe der vorliegenden Erfindung besteht darin, Möglichkeiten zu schaffen, mittels derer auf einfache, zuverlässige und effiziente Weise im Rahmen der Inbetriebnahme des Steuerungssystems eine einfache Ermittlung derjenigen Peripheriemodule möglich ist, die mit einer bestimmten Steuerungsaufgabe zusammenwirken sollen.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 8.

Durch diese Vorgehensweise - insbesondere durch das Merkmal, dass der jeweilige String über die vorkonfektionierte Schnittstelle des jeweiligen Peripheriemoduls in den jeweiligen ersten Speicherbereich eingeschrieben wird, besteht für den Benutzer die Möglichkeit, in den ersten Speicherbereich einen von ihm gewünschten String (= alphanumerische Zeichenkette) einzuschreiben, beispielsweise den String "direktes Messsystem für Achse 3" oder den String "Stromsteller für Achse 3". Vorzugsweise wird zwar im Rahmen des Strings zuerst das Regelobjekt genannt, also beispielsweise "Achse 3", so dass die Strings vorzugsweise besser "Achse 3, direktes Messsystem" und "Achse 3, Stromsteller" lauten. Dies ist jedoch nur von untergeordneter Bedeutung. Entscheidend ist, dass die Möglichkeit der Namensgebung nunmehr in der Hand des Benutzers liegt, so dass der Benutzer sofort weiß, mit welchem Namen sich die einzelnen Peripheriemodule bei der Steuereinrichtung "melden". Der Benutzer weiß also, welchen String die Peripheriemodule im Rahmen der Inbetriebnahmephase des Steuerungssystems an die Steuereinrichtung übermitteln. Der Benutzer kann daher die Steuereinrichtung derart programmieren, dass sie für jede Steuerungsaufgabe die "richtigen" Peripheriemodule ermittelt, nämlich diejenigen Peripheriemodule, die sich bei der Steuereinrichtung mit den dem Benutzer vorbekannten sprechenden und daher für den Benutzer leicht merkbaren Namen "melden". Für den Benutzer ist es daher leicht möglich, die Steuereinrichtung derart zu programmieren, dass sie anhand der übermittelten Strings die Zuordnung der Peripheriemodule zu der jeweiligen Steuerungsaufgaben ermittelt.

Es ist möglich, dass aufgrund der Ausgestaltung des Remanentspeichers als solches (beispielsweise als sogenanntes PROM) oder der Ausgestaltung des Peripheriemoduls der String nur einmalig in den Remanentspeicher einspeicherbar ist, aber hinterher nicht mehr änderbar ist. In der Regel sind jedoch auch derartige Änderungen möglich, beispielsweise durch eine Ausgestaltung des Remanentspeichers als EEPROM oder als Flash-EPROM. Entscheidend ist, dass der erste Speicherbereich mindestens einmal über die vorkonfektionierte Schnittstelle beschreibbar ist und dass der im Remanentspeicher gespeicherte Inhalt auch dann erhalten bleibt, wenn das jeweilige Peripheriemodul von einer Energieversorgung getrennt ist.

Vorzugsweise lesen die Peripheriemodule im Rahmen der Inbetriebnahmephase des Steuerungssystems aus einem zweiten Speicherbereich des Remanentspeichers des jeweiligen Peripheriemoduls eine für das jeweilige Peripheriemodul spezifische Adresse aus und übermitteln diese Adresse zusammen mit dem jeweiligen String an die Steuereinrichtung. Dadurch ist es möglich, dass die Steuereinrichtung intern eine Zuordnung der übermittelten Adressen zu den jeweiligen Peripheriemodulen vornimmt. Dadurch ist es möglich, dass die als Sensormodule ausgebildeten Peripheriemodule im Normalbetrieb des Steuerungssystems ihre jeweiligen Eingangsgrößen zusammen mit ihrer jeweiligen spezifischen Adresse - aber ohne den jeweiligen String - an die Steuereinrichtung übermitteln und dass die Steuereinrichtung im Normalbetrieb des Steuerungssystems die jeweiligen Ausgangsgrößen zusammen mit der jeweiligen spezifischen Adresse der als Motormodule ausgebildeten Peripheriemodule - aber ohne den jeweiligen String - an das jeweilige als Motormodul ausgebildete Peripheriemodul übermittelt. Diese Vorgehensweise führt in der Regel zu einer deutlich verringerten Belastung des Verbindungsnetzwerks. Dies ist insbesondere deshalb möglich, weil die Adressen in der Regel eine erheblich geringere Länge als die Strings aufweisen. Beispielsweise können die Strings Zeichenketten von 40, 50 oder noch mehr Zeichen sein, während für die Adressen in aller Regel 32 Bit oder maximal 64 Bit ausreichen.

In der Regel ist die Adresse vom Benutzer nicht änderbar. Dies ist im Regelfall auch nicht erforderlich. In Einzelfällen kann ein Ändern der Adresse jedoch möglich sein.

Es kann in Einzelfällen möglich sein, dass die Peripheriemodule derart ausgebildet sind, dass auch der jeweilige zweite Speicherbereich über die vorkonfektionierte Schnittstelle des jeweiligen Peripheriemoduls beschreibbar ist. In aller Regel ist dies jedoch nicht der Fall. Die Peripheriemodule prüfen in diesem Fall nach dem Entgegennehmen eines Schreibbefehls für den jeweiligen Remanentspeicher, ob mittels des Schreibbefehls über die vorkonfektionierte Schnittstelle Daten in den jeweiligen zweiten Speicherbereich des Remanentspeichers des jeweiligen Peripheriemoduls geschrieben werden sollen. Wenn dies der Fall sein sollte, verweigern sie die Ausführung des Schreibbefehls.

Die Peripheriemodule sind also vorzugsweise derart ausgebildet, dass der jeweilige zweite Speicherbereich über die vorkonfektionierte Schnittstelle des jeweiligen Peripheriemoduls nicht beschreibbar ist. Diese Lösung ist prinzipiell die beste. Denn dadurch kann insbesondere mit Sicherheit vermieden werden, dass der Benutzer versehentlich oder mutwillig (Stichwort Manipulation) Daten verändert, die er nicht verändern können soll, wie beispielsweise eine Herstellungsnummer oder die bereits erwähnte Adresse als solche, die - selbstverständlich - nur einmal vergeben sein darf.

Alternativ ist es möglich, die Sicherheit der im zweiten Speicherbereich hinterlegten Daten dadurch zu gewährleisten, dass die Peripheriemodule nach dem Entgegennehmen eines Schreibbefehls für den zweiten Speicherbereich des jeweiligen Remanentspeichers prüfen, ob dem jeweiligen Peripheriemodul über die vorkonfektionierte Schnittstelle zusätzlich zum Schreibbefehl ein die Schreibbefugnis spezifizierender Schreibcode vorgegeben wird. In diesem Fall führen die Peripheriemodule den Schreibbefehl nur dann aus, wenn der Schreibcode mit vorgegeben wird. Anderenfalls verweigern sie die Ausführung des Schreibbefehls.

In diesem Fall sind also die Peripheriemodule derart ausgebildet sind, dass der jeweilige zweite Speicherbereich über die vorkonfektionierte Schnittstelle des jeweiligen Peripheriemoduls zwar beschreibbar ist, aber nur dann beschreibbar ist, wenn dem jeweiligen Peripheriemodul zusätzlich zu einem Schreibbefehl zum Beschreiben des jeweiligen zweiten Speicherbereichs der die Schreibbefugnis spezifizierende Schreibcode vorgegeben wird. Der Schreibcode ist in diesem Fall nicht einfach ein Setzen eines Flags an einem Schreib-Eingang, sondern ein Zugriffscode nach Art eines Passworts.

Es ist möglich, dass der schreibende Zugriff auf den jeweiligen ersten Speicherbereich der Remanentspeicher der Peripheriemodule ohne weiteres möglich ist. Alternativ ist es möglich, dass die Peripheriemodule derart ausgebildet sind, dass auch der jeweilige erste Speicherbereich über die vorkonfektionierte Schnittstelle des jeweiligen Peripheriemoduls nur dann beschreibbar ist, wenn dem jeweiligen Peripheriemodul zusätzlich zu einem Schreibbefehl zum Beschreiben des jeweiligen ersten Speicherbereichs ein die Schreibbefugnis spezifizierender Schreibcode vorgegeben wird. In einem derartigen Fall prüfen die Peripheriemodule nach dem Entgegennehmen eines Schreibbefehls für den jeweiligen Remanentspeicher also auch, ob mittels des Schreibbefehls über die vorkonfektionierte Schnittstelle Daten in den jeweiligen ersten Speicherbereich des Remanentspeichers des jeweiligen Peripheriemoduls geschrieben werden sollen. Weiterhin führen die Peripheriemodule in diesem Fall auch diesen Schreibbefehl nur dann aus, wenn dem jeweiligen Peripheriemodul über die vorkonfektionierte Schnittstelle zusätzlich zum Schreibbefehl ein die Schreibbefugnis spezifizierender Schreibcode vorgegeben wird. Anderenfalls verweigern sie die Ausführung des Schreibbefehls. Der Schreibcode zum Beschreiben des jeweiligen zweiten Speicherbereichs weist in diesem Fall jedoch ein höheres Schutzniveau auf als der Schreibcode zum Beschreiben des jeweiligen ersten Speicherbereichs.

Beispielsweise kann der Schreibcode zum Beschreiben des jeweiligen zweiten Speicherbereichs aus mehr alphanumerischen Zeichen bestehen als der Schreibcode zum Beschreiben des jeweiligen ersten Speicherbereichs. Alternativ oder zusätzlich kann das Zeichenreservoir, anhand dessen der Schreibcode zum Beschreiben des jeweiligen zweiten Speicherbereichs bestimmt wird, mehr Zeichen umfassen als das Zeichenreservoir, anhand dessen der Schreibcode zum Beschreiben des jeweiligen ersten Speicherbereichs bestimmt wird. Ein einfaches Beispiel, bei dem beide Vorgehensweisen kombiniert sind: Der Schreibcode zum Beschreiben des jeweiligen zweiten Speicherbereichs besteht aus acht alphanumerischen Zeichen, welche sowohl Ziffern als auch Großbuchstaben sein können. Der Schreibcode zum Beschreiben des jeweiligen ersten Speicherbereichs besteht aus vier Ziffern.

Vorzugsweise vergleicht die Steuereinrichtung die übermittelten Strings mit einer der Steuereinrichtung vorgegebenen Liste von Strings. In diesem Fall kann die Steuereinrichtung insbesondere eine Fehlermeldung ausgeben, wenn die übermittelten Strings von den in der vorgegebenen Liste von Strings enthaltenen Strings abweichen. Der Vergleich kann einen Vergleich dahingehend umfassen, ob der Steuereinrichtung im Rahmen der Inbetriebnahme des Steuerungssystems die in der Liste von Strings enthaltenen Strings von den Peripheriemodulen übermittelt werden (Fehlerfall: Ein in der Liste enthaltener String wird von keinem Peripheriemodul übermittelt). Alternativ oder zusätzlich kann der Vergleich einen Vergleich dahingehend umfassen, ob der Steuereinrichtung im Rahmen der Inbetriebnahme des Steuerungssystems die in der Liste von Strings enthaltenen Strings von den Peripheriemodulen mehrfach übermittelt werden (Fehlerfall: Ein in der Liste enthaltener String wird von mehr als einem Peripheriemodul übermittelt).

Die Strings weisen in der Regel eine maximal zulässige Länge auf. Die maximal zulässige Länge kann nach Bedarf bestimmt sein. In der Regel ist sie mindestens 32 Zeichen. Beispielsweise kann die maximale Länge zwischen 40 Zeichen und 100 Zeichen liegen, insbesondere zwischen 60 Zeichen und 80 Zeichen. Besonders bevorzugt ist eine Länge von 2⁶ = 64 Zeichen.

Die Aufgabe wird weiterhin durch ein Peripheriemodul mit den Merkmalen des Anspruchs 9 gelöst. Vorteilhafte Ausgestaltungen des Peripheriemoduls sind Gegenstand der abhängigen Ansprüche 10 bis 16.

Die vorteilhaften Ausgestaltungen des Peripheriemoduls korrespondieren über weite Strecken mit den vorteilhaften Ausgestaltungen des Betriebsverfahrens. Auf diese Ausgestaltungen wird nachstehend daher nicht näher eingegangen.

Zusätzlich zu diesen Ausgestaltungen kann das Peripheriemodul eine Anzeigeeinrichtung aufweisen, über welche der im ersten Speicherbereich des Remanentspeichers des Peripheriemoduls gespeicherte String permanent oder temporär angezeigt wird. Dadurch ist für den Benutzer direkt und ohne weiteres Hilfsmittel der gespeicherte String erkennbar.

Die Aufgabe wird weiterhin durch ein Programmiergerät mit den Merkmalen des Anspruchs 17 gelöst. Vorteilhafte Ausgestaltungen des Programmiergeräts sind Gegenstand der abhängigen Ansprüche 18 bis 26.

Dadurch wird dem Benutzer die Möglichkeit gegeben, auf einfache Weise den String definieren und in den ersten Speicherbereich des Remanentspeichers des Peripheriemoduls einschreiben zu können. Das Programmiergerät kann beispielsweise als sogenanntes Handheld ausgebildet sein.

In der einfachsten Ausgestaltung wird lediglich der String in den ersten Speicherbereich des Remanentspeichers des Peripheriemoduls eingeschrieben. In einer besonders bevorzugten Ausgestaltung ist jedoch vorgesehen, dass das Programmiergerät einen integrierten Drucker aufweist oder mit einem externen Drucker verbindbar ist und dass das Programmiergerät derart ausgebildet ist, das es in zwangsweiser Kopplung mit dem Einschreiben des Strings in den ersten Speicherbereich des Remanentspeichers des Peripheriemoduls einen Druckauftrag zum Drucken des Strings an den Drucker übermittelt. Dadurch wird erreicht, dass - quasi zugleich mit dem Einschreiben des Strings in den ersten Speicher - auch ein Ausdruck des Strings zur Verfügung steht. Beispielsweise kann mittels des Druckers ein Klebeetikett gedruckt werden, das das Peripheriemodul vom Benutzer in engem zeitlichem Zusammenhang (Zeitversatz in der Regel unterhalb 1 Minute, oftmals unterhalb 10 Sekunden) mit dem Einschreiben des Strings in den ersten Speicherbereich des Remanentspeichers des Peripheriemoduls zusätzlich mit dem Klebeetikett versehen werden kann. Spätere Verwechslungen sind dadurch mit sehr hoher Wahrscheinlichkeit ausgeschlossen. Wenn sie dennoch auftreten, können sie ohne weiteres erkannt werden.

In einer weiter bevorzugten Ausgestaltung ist vorgesehen, dass das Programmiergerät in der Lage ist, den für den String vorgesehenen ersten Speicherbereich des Remanentspeichers des Peripheriemoduls auszulesen und dessen Inhalt mittels der Ausgabeeinrichtung an den Benutzer auszugeben. Beispielsweise kann beim Verbinden von Peripheriemodul und Programmiergerät miteinander automatisch ein derartiges Auslesen angestoßen werden. Alternativ oder zusätzlich ist es möglich, dass das Auslesen aufgrund eines vom Benutzer des Programmiergeräts vorgegebenen Befehls erfolgt. Durch das Auslesen des entsprechenden Speicherbereichs ist es auf einfache Weise möglich, die Namensgebung für ein bestimmtes Peripheriemodul zu überprüfen.

In einer auf der letztgenannten Ausgestaltung aufbauenden weitergehenden Ausgestaltung ist vorgesehen, dass das Programmiergerät den ausgelesenen Inhalt zwischenspeichert und den ausgelesenen Inhalt zu einem späteren Zeitpunkt - unabhängig davon, ob zwischenzeitlich das Peripheriemodul gewechselt wurde oder nicht - als String über die vorkonfektionierten Schnittstellen und das Verbindungskabel in den ersten Speicherbereich des Remanentspeichers des zu dem späteren Zeitpunkt mit dem Programmiergerät verbundenen Peripheriemoduls einschreibt. Dadurch ist es beispielsweise möglich, bei einem defekten Peripheriemodul dessen String mittels des Programmiergeräts auszulesen, sodann ein baugleiches oder sonst funktional gleichwertiges, jedoch ordnungsgemäß arbeitendes Peripheriemodul mit dem Programmiergerät zu verbinden und den ausgelesenen und zwischengespeicherten String in das letztgenannte Peripheriemodul einzuschreiben.

Das Programmiergerät kann auch für weitere Zwecke verwendet werden.

Beispielsweise ist es möglich, dass das Programmiergerät in der Lage ist, über die vorkonfektionierten Schnittstellen (des Programmiergeräts und des Peripheriemoduls) und das Verbindungskabel Daten, die in einem zweiten Speicherbereich des Remanentspeichers des Peripheriemoduls gespeichert sind, auszulesen und die Daten mittels der Ausgabeeinrichtung an den Benutzer auszugeben.

In ähnlicher Weise ist es möglich, dass das Programmiergerät in der Lage ist, über die vorkonfektionierten Schnittstellen (des Programmiergeräts und des Peripheriemoduls) und das Verbindungskabel einen Funktionstest des Peripheriemoduls zu initiieren, über die vorkonfektionierten Schnittstellen und das Verbindungskabel vom Peripheriemodul Ergebnisdaten des Funktionstests entgegenzunehmen und die Ergebnisdaten mittels der Ausgabeeinrichtung an den Benutzer auszugeben. Der Funktionstest wird vorzugsweise vom Benutzer über eine entsprechende Vorgabe an das Programmiergerät angestoßen.

Das Programmiergerät kann weiterhin in der Lage sein, die aus dem zweiten Speicherbereich des Remanentspeichers des Peripheriemoduls ausgelesenen Daten und/oder die Ergebnisdaten an einen weiteren Rechner zu übermitteln. Das Programmiergerät kann zu diesem Zweck beispielsweise über eine E-Mail-Funktionalität verfügen und/oder mit einem USB-Port ausgestattet sein.

Das Programmiergerät kann weiterhin auch als Programmiergerät im engeren Sinne ausgebildet sein. In diesem Fall ist das Programmiergerät in der Lage, Programmdaten in einen dritten Speicherbereich des Remanentspeichers des Peripheriemoduls einzuschreiben. Dadurch ist mittels des Programmiergeräts beispielsweise ein Firmwareupdate des Peripheriemoduls möglich.

Das Programmiergerät ist vorzugsweise so einfach wie möglich ausgestaltet. Insbesondere weist das Programmiergerät in der Regel nur eine einzige vorkonfektionierte Schnittstelle auf, über die das Programmiergerät mit dem Peripheriemodul verbindbar ist. In einer Ausgestaltung ist eine einzige vorkonfektionierte Schnittstelle jedoch nicht ausreichend. Denn in dem Fall, dass das Programmiergerät in der Lage ist, den für den String vorgesehenen ersten Speicherbereich des Remanentspeichers des Peripheriemoduls über die vorkonfektionierte Schnittstelle des Programmiergeräts, das Verbindungskabel und die vorkonfektionierte Schnittstelle des Peripheriemoduls auszulesen, ist - zusätzlich zu einer Ausgabe des ausgelesenen Inhalts an den Benutzer - eine weitere Funktion realisierbar, für die auf dem Programmiergerät zusätzlich zu der vorkonfektionierten Schnittstelle mindestens eine weitere vorkonfektionierte Schnittstelle angeordnet sein muss. In diesem Fall - also im Falle des Vorhandenseins von zwei identischen vorkonfektionierten Schnittstellen -, ist es möglich, das Peripheriemodul über das Programmiergerät mit der Steuereinrichtung des Steuerungssystems zu verbinden. In diesem Fall ist das Programmiergerät in der Lage, den ausgelesenen Inhalt (d.h. den gespeicherten String) über die weitere vorkonfektionierte Schnittstelle und ein weiteres Verbindungskabel an die Steuereinrichtung des verteilten Steuerungssystems auszugeben. Das Programmiergerät kann also in diesem Fall initiieren, dass das Peripheriemodul sich mit seinem Namen (= String) bei der Steuereinrichtung "meldet".

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein verteiltes Steuerungssystem,
- FIG 2: ein Peripheriemodul,
- FIG 3: einen Remanentspeicher,
- FIG 4: ein Ablaufdiagramm,
- FIG 5: ein weiteres Ablaufdiagramm,
- FIG 6: ein Peripheriemodul und ein Programmiergerät,
- FIG 7: ein Ablaufdiagramm,
- FIG 8: ein weiteres Ablaufdiagramm,
- FIG 9: ein weiteres Ablaufdiagramm,
- FIG 10: ein weiteres Ablaufdiagramm,
- FIG 11: ein weiteres Ablaufdiagramm,
- FIG 12: eine Modifikation des verteilten Steuerungssystems von FIG 1 und
- FIG 13: ein Ablaufdiagramm.

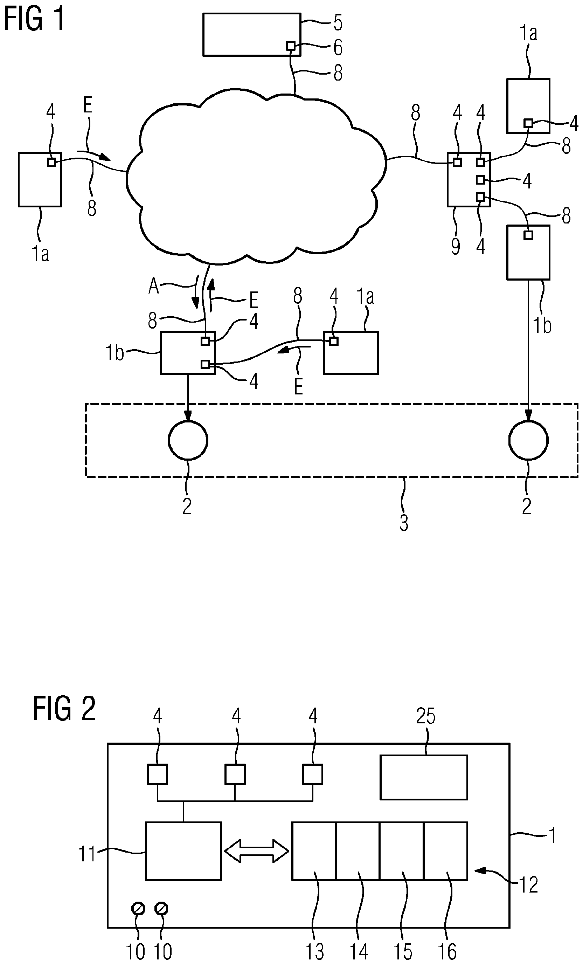

FIG 1 zeigt in schematischer Weise den Aufbau eines verteilten Steuerungssystems. Gemäß FIG 1 umfasst das Steuerungssystem eine Mehrzahl von Sensormodulen 1a. Das Steuerungssystem umfasst weiterhin eine Mehrzahl von Motormodulen 1b auf. Mittels der Motormodule 1b werden gemäß FIG 1 Antriebe 2 einer gesteuerten Maschine 3 angesteuert. Mittels der Sensormodule 1a werden für die Ermittlung der korrekten Ansteuerung der Antriebe 2 erforderliche analoge und digitale Messgrößen erfasst, beispielsweise als analoge Größen eine Lage oder eine Drehzahl oder als digitale Größen eine Temperatur oder das Ansprechen eines Grenzwertgebers.

Sowohl die Sensormodule 1a als auch die Motormodule 1b sind Peripheriemodule 1 im Sinne der vorliegenden Erfindung. Soweit nachfolgend ausschließlich auf die Sensormodule 1a Bezug genommen wird, werden das Wort Sensormodul und das Bezugszeichen 1a verwendet. In analoger Weise werden nachfolgend das Wort Motormodul und das Bezugszeichen 1b verwendet, soweit ausschließlich auf die Motormodule Bezug genommen wird. Wenn sowohl auf die Sensormodule 1a als auch auf die Motormodule 1b Bezug genommen werden soll, werden das Wort Peripheriemodul und das Bezugszeichen 1 verwendet.

Auf den Peripheriemodulen 1 ist jeweils (mindestens) eine vorkonfektionierte Schnittstelle 4 angeordnet. Die vorkonfektionierte Schnittstelle 4 ist für alle Peripheriemodule 1 einheitlich ausgebildet. Sie kann beispielsweise als Ethernet-Schnittstelle ausgebildet sein.

Das verteilte Steuerungssystem umfasst weiterhin eine Steuereinrichtung 5. Auch die Steuereinrichtung 5 weist (mindestens) eine vorkonfektionierte Schnittstelle 6 auf, die nach Ausgestaltung und Funktion mit einer der vorkonfektionierten Schnittstellen 4 übereinstimmt. Die Peripheriemodule 1 sind über die vorkonfektionierten Schnittstellen 4 direkt oder indirekt über ein Verbindungsnetzwerk 7 mit der Steuereinrichtung 5 verbunden. Mit dem Bezugszeichen 8 sind zum Herstellen der Verbindungen erforderliche Verbindungskabel bezeichnet.

Beispielsweise kann - siehe in FIG 1 unten - ein Motormodul 1b direkt mit der Steuereinrichtung 5 verbunden sein. Ebenso kann - siehe ebenfalls in FIG 1 unten - ein Sensormodul 1a über ein Motormodul 1b indirekt mit der Steuereinrichtung 5 verbunden sein. Gleichermaßen kann - siehe in FIG 1 links - ein Sensormodul 1a direkt mit der Steuereinrichtung 5 verbunden sein. Weiterhin können - siehe in FIG 1 rechts - mehrere Peripheriemodule 1 über ein Verteilerelement 9 - beispielsweise einen Hub oder einen Switch - indirekt mit der Steuereinrichtung 5 verbunden sein. Analoge Ausführungen gelten - siehe ebenfalls in FIG 1 rechts - für ein Motormodul 1b.

Die genaue Art und Weise der Verbindung ist von untergeordneter Bedeutung. Entscheidend ist lediglich, dass die Peripheriemodule 1 in einem Normalbetrieb des Steuerungssystems in Echtzeit mit der Steuereinrichtung 5 kommunizieren können, das heißt, dass die Sensormodule 1a Eingangsgrößen E in Echtzeit an die Steuereinrichtung 5 übermitteln können und dass die Steuereinrichtung 5 in Echtzeit Ausgangsgrößen A an die Motormodule 1b übermitteln kann. Der Normalbetrieb des Steuerungssystems ist derjenige Betrieb, in dem die Maschine 3 von dem Steuerungssystem gesteuert wird.

Die Peripheriemodule 1 müssen mit elektrischer Energie versorgt werden, damit sie ihre Funktion erfüllen können. Es ist entsprechend der Darstellung in FIG 2 möglich, dass zum Zuführen einer elektrischen Energieversorgung separate Anschlüsse 10 vorhanden sind. Die Anschlüsse 10 können entsprechend der Darstellung in FIG 2 als Schraubklemmen ausgebildet sein. Die Anschlüsse 10 können jedoch ebenso auch anders ausgebildet sein, beispielsweise als Käfigzugklemmen oder als Bestandteile einer vorkonfektionierten Steckverbindung. Auch ist es möglich, dass die Anschlüsse 10 für die elektrische Energieversorgung integrale Bestandteile der vorkonfektionierten Schnittstellen 4 der Peripheriemodule 1 sind. Welche dieser Ausgestaltungen ergriffen wird, ist im Rahmen der vorliegenden Erfindung von untergeordneter Bedeutung.

Aus FIG 2 ist weiterhin ersichtlich, dass das dargestellte Peripheriemodul 1 mehrere vorkonfektionierte Schnittstellen 4 aufweist. Minimal ist es jedoch ausreichend, wenn die Peripheriemodule 1 jeweils eine einzige derartige Schnittstelle 4 aufweisen.

Die Peripheriemodule 1 weisen gemäß FIG 2 weiterhin eine Funktionsschaltung 11 auf. Die Funktionsschaltung 11 realisiert die technische Funktion des jeweiligen Peripheriemoduls 1. Im Rahmen der vorliegenden Erfindung kommt es insbesondere darauf an, dass es möglich ist, ausgehend von der vorkonfektionierten Schnittstelle 4 (bzw. einer der vorkonfektionierten Schnittstellen 4) über die Funktionsschaltung 11 auf einen Remanentspeicher 12 des jeweiligen Peripheriemoduls zuzugreifen. Der Remanentspeicher 12 weist gemäß FIG 2 vier Speicherbereiche 13 bis 16 auf, nachfolgend zur Unterscheidung voneinander als erster Speicherbereich 13, zweiter Speicherbereich 14, dritter Speicherbereich 15 und vierter Speicherbereich 16 bezeichnet. Im Rahmen der vorliegenden Erfindung ist es zwingend erforderlich, dass der erste Speicherbereich 13 vorhanden ist. Die anderen Speicherbereiche 14 bis 16 können nach Bedarf vorhanden sein oder nicht vorhanden sein.

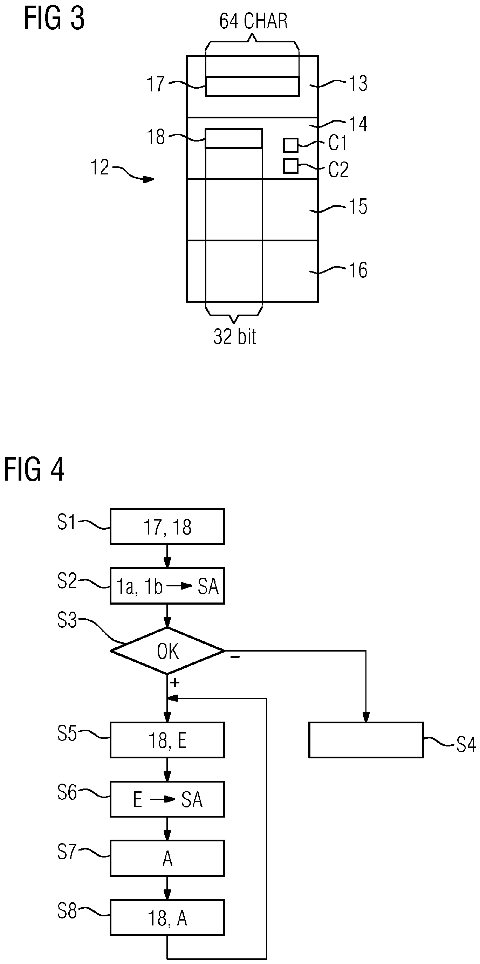

Die Speicherbereiche 13 bis 16 sind in FIG 2 entsprechend ihrer Nummerierung aufeinanderfolgend eingezeichnet und in FIG 3 nochmals größer dargestellt. Die Speicherbereiche 13 bis 16 sind weiterhin in den FIG 2 und 3 gleich groß eingezeichnet. Beide Sachverhalte sind jedoch von untergeordneter Bedeutung. So könnte beispielsweise der dritte Speicherbereich 15 erheblich größer sein als die anderen Speicherbereiche 13, 14, 16. Auch könnte beispielsweise der zweite Speicherbereich 14 in der Reihenfolge der Speicherbereiche 13 bis 16 - bezogen beispielsweise auf die Adressierung der Speicherbereiche 13 bis 16 - der erste oder der letzte der Speicherbereiche 13 bis 16 sein.

Dem Normalbetrieb des Steuerungssystems geht eine Inbetriebnahmephase des Steuerungssystems voraus. Im Rahmen der Inbetriebnahmephase lesen die Peripheriemodule 1 aus dem ersten Speicherbereich 13 ihres jeweiligen Remanentspeichers 12 einen jeweiligen String 17 (= alphanumerische Zeichenkette) aus. Den ausgelesenen String 17 übermitteln die Peripheriemodule 1 über das Verbindungsnetzwerk 7 an die Steuereinrichtung 5. Die Steuereinrichtung 5 nimmt - siehe FIG 4 - die an sie übermittelten Strings 17 in einem Schritt S1 entgegen. Die Strings 17 können eine untereinander gleiche Länge oder voneinander verschiedene Längen aufweisen. Eine maximal zulässige Länge der Strings 17 ist jedoch durch die Dimensionierung und/oder Konfigurierung des ersten Speicherbereichs 13 bestimmt. Die maximale Länge sollte vorzugsweise mindestens 32 Zeichen sein. Die in FIG 3 dargestellte maximale Länge von 64 Zeichen (wofür mindestens die gleiche Anzahl an Bytes benötigt wird) ist jedoch rein beispielhaft.

Üblicherweise - dies ist jedoch nicht zwingend erforderlich - lesen die Peripheriemodule 1 zusätzlich aus dem zweiten Speicherbereich 14 ihres jeweiligen Remanentspeichers 12 eine jeweilige Adresse 18 aus. In diesem Fall übermitteln die Peripheriemodule 1 ihre jeweilige Adresse 18 zusammen mit dem jeweiligen String 17 über das Verbindungsnetzwerk 7 an die Steuereinrichtung 5. Die Steuereinrichtung 5 nimmt in diesem Fall - siehe FIG 4 - im Rahmen des Schrittes S1 die an sie übermittelten Adressen 18 zusammen mit den an sie übermittelten Strings 17 entgegen. Die Adressen 18 weisen in aller Regel eine erheblich geringere Länge als die Strings 17 auf. Insbesondere weisen die Adressen 18 entsprechend der Darstellung in FIG 3 in der Regel eine Länge von maximal 32 Bit = 4 Byte auf, in Ausnahmefällen von maximal 64 Bit = 8 Byte.

In einem Schritt S2 ordnet die Steuereinrichtung 5 die Peripheriemodule 1 anhand der an sie übermittelten Strings 17 Steuerungsaufgaben SA zu, die innerhalb der Steuereinrichtung 5 implementiert sind. Insbesondere können innerhalb der Steuereinrichtung 5 den jeweiligen Steuerungsaufgaben SA Namen zugeordnet sein, welche die der jeweiligen Steuerungsaufgabe SA zuzuordnenden Peripheriemodule 1 aufweisen sollen. Die Steuereinrichtung 5 muss daher lediglich die an sie übermittelten Strings 17 auf Identität mit den den jeweiligen Steuerungsaufgaben SA zugeordneten Namen überprüfen, um die entsprechenden Peripheriemodule 1 aufzufinden.

Den Steuerungsaufgaben SA ist in der Regel jeweils ein einzelnes Motormodul 1b zugeordnet. In Ausnahmefällen kann den Steuerungsaufgaben SA jedoch auch mehr als ein Motormodul 1b zugeordnet sein. Weiterhin ist den Steuerungsaufgaben SA in der Regel jeweils mindestens ein Sensormodul 1a zugeordnet. Unter Umständen können den Steuerungsaufgaben SA jedoch auch mehrere Sensormodule 1bA zugeordnet sein. Unabhängig von der Anzahl an einer jeweiligen Steuerungsaufgabe SA zugeordneten Peripheriemodulen 1 ist die Ermittlung der zugeordneten Peripheriemodule 1 jedoch ohne weiteres anhand der übermittelten Strings 17 möglich.

Die Namen (= Strings), die innerhalb der Steuereinrichtung 5 den einzelnen Steuerungsaufgaben SA zugeordnet sind, bilden in ihrer Gesamtheit eine Liste. Es ist möglich (aber nicht zwingend erforderlich), dass die Steuereinrichtung 5 in einem Schritt S3 die Strings 17, die ihr von den Peripheriemodulen 1 übermittelt werden, mit den Strings der Liste vergleicht. Beispielsweise kann die Steuereinrichtung 5 prüfen, ob sie von den Peripheriemodulen 1 für jeden String der Liste jeweils einen String 17 entgegengenommen hat. Alternativ oder zusätzlich kann die Steuereinrichtung 5 prüfen, ob sie von den Peripheriemodulen 1 Strings 17 mehrfach erhalten hat, ob also für einen bestimmten in der Liste enthaltenen String mehr als ein Peripheriemodul 1 einen korrespondierenden String 17 übermittelt hat. Wenn die Prüfung des Schrittes S3 negativ verläuft, geht die Steuereinrichtung 5 zu einem Schritt S4 über. Im Schritt S4 gibt die Steuereinrichtung 5 eine Fehlermeldung M aus. Anderenfalls ist die Zuordnung der Peripheriemodule 1 zu den jeweiligen Steuerungsaufgaben SA ordnungsgemäß abgeschlossen. In diesem Fall geht die Steuereinrichtung 5 gemäß FIG 3 zu einem Schritt S5 über. Im Schritt S5 beginnt der Normalbetrieb des Steuerungssystems.

Gemäß der Darstellung in FIG 4 ist der Schritt S3 dem Schritt S2 nachgeordnet. Der Schritt S3 könnte jedoch alternativ dem Schritt S2 vorgeordnet sein. Weiterhin ist der Schritt S3 (und mit ihm der Schritt S4) nur optional. Der Schritt S3 kann also entfallen. In diesem Fall geht die Steuereinrichtung 5 vom Schritt S2 direkt zum Schritt S5 über.

Im Schritt S5 nimmt die Steuereinrichtung 5 von den Sensormodulen 1a - aufgrund der Übermittlung über das Verbindungsnetzwerk 7 somit über die vorkonfektionierten Schnittstellen 4 der entsprechenden Sensormodule 1a - deren Eingangsgrößen E entgegen.

In einem Schritt S6 ordnet die Steuereinrichtung 5 die an sie übermittelten Eingangsgrößen E der jeweiligen Steuerungsaufgabe SA zu. Diese Zuordnung ist möglich, weil der Steuereinrichtung 5 aufgrund der vorherigen Ausführung des Schrittes S2 bekannt ist, welches Sensormodul 1a welche Eingangsgrößen E liefert.

Im einfachsten Fall übermitteln die Sensormodule 1a zur Implementierung des Schrittes S5 zusammen mit ihren Eingangsgrößen E jeweils auch erneut ihren jeweiligen String 17. Vorzugsweise übermitteln Sensormodule 1a jedoch zusammen mit ihren Eingangsgrößen E jeweils nur noch ihre jeweilige Adresse 18. Auch mit der Adresse 18 ist die Zuordnung der Eingangsgrößen E zur jeweiligen Steuerungsaufgabe SA ohne weiteres möglich, weil die Adressen 18 für das jeweilige Peripheriemodul 1 spezifisch sind, also einmalig sind.

In einem Schritt S7 arbeitet die Steuereinrichtung 5 ihre Steuerungsaufgaben SA ab. Insbesondere ermittelt die Steuereinrichtung 5 im Rahmen des Schrittes S7 in Abhängigkeit von den Eingangsgrößen E, die der jeweiligen Steuerungsaufgabe SA zugeordnet sind, jeweilige Ausgangsgrößen A. Die Ausgangsgrößen A übermittelt die Steuereinrichtung 5 in einem Schritt S8 an die Motormodule 1b, die der jeweiligen Steuerungsaufgabe SA zugeordnet sind.

Analog zur Übermittlung der Eingangsgrößen E an die Steuereinrichtung 5 übermittelt die Steuereinrichtung 5 zur Implementierung des Schrittes S8 im einfachsten Fall zusammen mit den jeweiligen Ausgangsgrößen A jeweils auch erneut den String 17 desjenigen Motormoduls 1b, für das die jeweiligen Ausgangsgrößen A bestimmt sind. Vorzugsweise übermitteln die Steuereinrichtung 5 jedoch zusammen mit den jeweiligen Ausgangsgrößen A jeweils nur noch die jeweilige Adresse 18 des Motormoduls 1b, für das die jeweiligen Ausgangsgrößen A bestimmt sind. Auch mit der Adresse 18 ist die Zuordnung der Ausgangsgrößen A zur jeweiligen Steuerungsaufgabe SA ohne weiteres möglich, weil die Adressen 18 für das jeweilige Peripheriemodul 1 spezifisch sind, also einmalig sind.

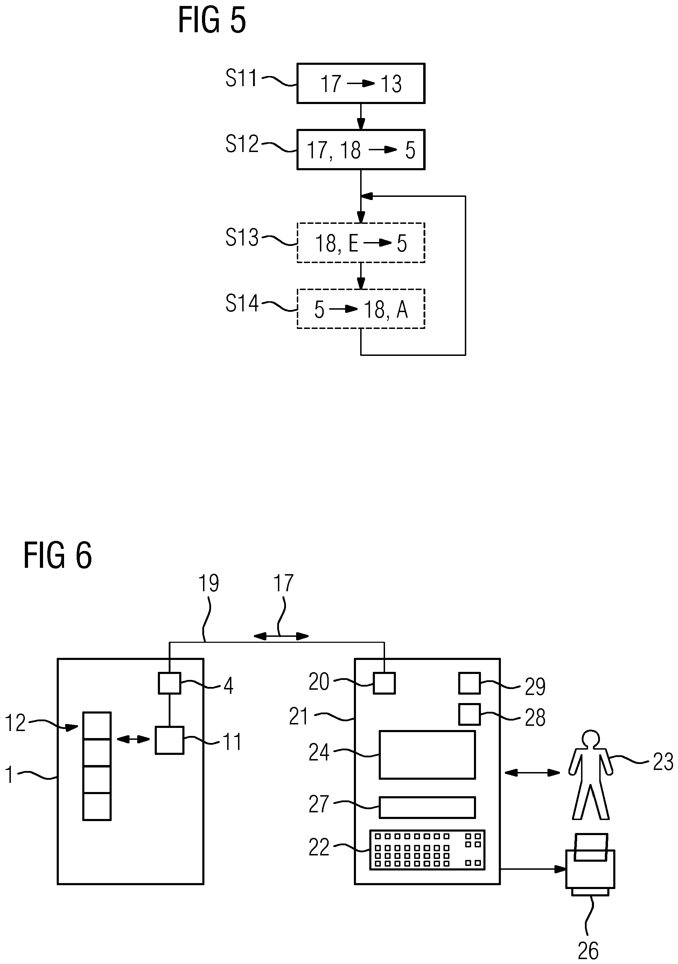

Soweit es die Steuereinrichtung 5 betrifft, ist die erfindungsgemäße Vorgehensweise prinzipiell auch im Stand der Technik realisierbar. Die erfindungsgemäße Vorgehensweise wird im Stand der Technik jedoch nicht ergriffen, weil die von den Peripheriemodulen 1 im Stand der Technik übermittelten Strings 17 zwar eindeutig sind, jedoch für Menschen schwer verständlich sind. Dieses Problem wird erfindungsgemäß jedoch beseitigt. Dies wird insbesondere aus der korrespondierenden Betriebsweise der Peripheriemodule 1 ersichtlich werden, die nachfolgend in Verbindung mit FIG 5 für ein beliebiges der Peripheriemodule 1 näher erläutert wird.

Gemäß FIG 5 wird in einem Schritt S11 der String 17 in den ersten Speicherbereich 13 des Remanentspeichers 12 des jeweiligen Peripheriemoduls 1 eingeschrieben. Entscheidend ist, dass dieses Einschreiben über die vorkonfektionierte Schnittstelle 4 erfolgt, also diejenige Schnittstelle 4, über welche bei der Inbetriebnahme und im Normalbetrieb der String 17, gegebenenfalls die Adresse 18 und die Eingangsgrößen E oder die Ausgangsgrößen A übertragen werden. Weiterhin erfolgt das Einschreiben vor der Inbetriebnahmephase.

Beispielsweise kann zu diesem Zweck vorab - also vor dem Einfügen des jeweiligen Peripheriemoduls 1 in das verteilte Steuerungssystem, in jedem Fall aber vor der obenstehend in Verbindung mit FIG 4 erläuterten Inbetriebnahme des verteilten Steuerungssystems - das jeweilige Peripheriemodul 1 entsprechend der Darstellung in FIG 6 über ein Verbindungskabel 19 mit einer vorkonfektionierten Schnittstelle 20 verbunden werden, die auf einem Programmiergerät 21 angeordnet ist. Das Verbindungskabel 19 kann identisch mit einem der Verbindungskabel 8 sein. Es kann - nicht aber muss - die Energieversorgung des entsprechenden Peripheriemoduls 1 bewerkstelligen.

Die vorkonfektionierte Schnittstelle 20 weist die gleiche Konfiguration auf wie die vorkonfektionierte Schnittstellen 4 der Peripheriemodule 1. Wenn - beispielsweise - die vorkonfektionierten Schnittstellen 4 der Peripheriemodule 1 als Ethernet-Schnittstellen ausgebildet sind, ist auch die vorkonfektionierte Schnittstelle 20 als Ethernet-Schnittstelle ausgebildet. Das Verbindungskabel 19 kann in einem derartigen Fall als einfaches LAN-Kabel ausgebildet sein. Unabhängig davon, ob das Verbindungskabel 19 als LAN-Kabel ausgebildet ist oder nicht, ist das Verbindungskabel 19 jedoch in der Regel - analog zu den Verbindungskabeln 8 - als symmetrisches Kabel ausgebildet, das an beiden Enden identische Stecker aufweist.

Das Programmiergerät 21 weist eine Eingabeeinrichtung 22 auf, beispielsweise eine vollständige alphanumerische Tastatur. Mittels der Eingabeeinrichtung 22 ist ein Benutzer 23 in der Lage, dem Programmiergerät 21 einen jeweiligen String 17 vorzugeben. Der Strings 17 wird zunächst über eine Ausgabeeinrichtung 24 des Programmiergeräts 21 an den Benutzer 23 ausgegeben. Die Ausgabeeinrichtung 24 kann beispielsweise ein übliches LCD-Display sein, über das alphanumerische Zeichen ausgegeben werden können. Wenn als nächstes der Benutzer 23 einen Bestätigungsbefehl eingeben, schreibt das Programmiergerät 21 über seine vorkonfektionierte Schnittstelle 20, das Verbindungskabel 19 und die vorkonfektionierte Schnittstelle 4 des angeschlossenen Peripheriemoduls 1 den vorgegebenen String 17 in den ersten Speicherbereich 13 des Remanentspeichers 12 des angeschlossenen Peripheriemoduls 1 ein.

Nach dem Einschreiben des Strings 17 in das an das Programmiergerät 21 angeschlossene Peripheriemodul 1 kann die gleiche Vorgehensweise für weitere Peripheriemodule 1 wiederholt werden. Lediglich der jeweilige String 17 muss vom Benutzer 23 individuell für das jeweilige Peripheriemodul 1 bestimmt werden.

Der Schritt S11 wird zu einem Zeitpunkt ausgeführt, zudem das jeweilige Peripheriemodul 1 noch nicht in das verteilte Steuerungssystem eingebunden ist. Nach dem Schritt S11 erfolgt die Einbindung des jeweiligen Peripheriemoduls 1 in das verteilte Steuerungssystem. Wenn alle erforderlichen Peripheriemodule 1 in das verteilte Steuerungssystem eingebunden sind, wird die eigentliche Inbetriebnahme des verteilten Steuerungssystems gestartet. Im Rahmen der eigentlichen Inbetriebnahme liest das Peripheriemodul 1 in einem Schritt S12 den String 17 aus dem ersten Speicherbereich 13 seines Remanentspeichers 12 aus und übermittelt ihn über die vorkonfektionierte Schnittstelle 4 an die Steuereinrichtung 5. Vorzugsweise - vergleiche die korrespondierenden Ausführungen zum Schritt S3 - liest das Peripheriemodul 1 aus dem zweiten Speicherbereich 14 auch die Adresse 18 aus und übermittelt sie im Rahmen des Schrittes S12 zusammen mit dem String 17 an die Steuereinrichtung 5.

Sodann geht das jeweilige Peripheriemodul 1 zu einem Schritt S13 oder zu einem Schritt S14 über. Von den Schritten S13 und S14 wird also nur einer ausgeführt. Aus diesem Grund sind die Schritte S13 und S14 in Figur 5 nur gestrichelt eingezeichnet. Zum Schritt S13 geht das Peripheriemodul 1 über, wenn es als Sensormodul 1a ausgebildet ist. Im Schritt S13 erfasst das als Sensormodul 1a ausgebildete Peripheriemodul 1 seine Messsignale ein und übermittelt die erfassten Messsignale als Eingangsgrößen E über die vorkonfektionierte Schnittstelle 4 und das Verbindungsnetzwerk 7 an die Steuereinrichtung 5. Die Übermittlung des Schrittes S13 erfolgt entweder zusammen mit dem jeweiligen String 17 oder - bevorzugt - zusammen mit der jeweiligen Adresse 18 des als Sensormodul 1a ausgebildeten Peripheriemoduls 1. Zum Schritt S14 geht das Peripheriemodul 1 über, wenn es als Motormodul 1b ausgebildet ist. Im Schritt S14 nimmt das als Motormodul 1b ausgebildete Peripheriemodul 1 über das Verbindungsnetzwerk 7 und die vorkonfektionierte Schnittstelle 4 Ausgangsgrößen A entgegen. Die Übermittlung des Schrittes S14 erfolgt entweder zusammen mit dem jeweiligen String 17 oder - bevorzugt - zusammen mit der jeweiligen Adresse 18 des als Motormodul 1b ausgebildeten Peripheriemoduls 1. Anhand des Strings 17 oder der Adresse 18 kann das entsprechende, als Motormodul 1b ausgebildete Peripheriemodul 1 somit bestimmen, ob die entgegengenommenen Ausgangsgrößen A für das betreffende Peripheriemodul 1 oder für ein anderes Peripheriemodul 1 bestimmt waren. Sofern die entgegengenommenen Ausgangsgrößen A für das betreffende Peripheriemodul 1 bestimmt waren, erfolgt im Rahmen des Schrittes S14 eine entsprechende Ansteuerung des Antriebs 2.

Die entscheidende Ausgestaltung der Peripheriemodule 1 besteht somit darin, dass die Peripheriemodule 1 derart ausgebildet sind, dass der jeweilige erste Speicherbereich 13 des jeweiligen Remanentspeichers 12 über die (mindestens eine) vorkonfektionierte Schnittstelle 4 des jeweiligen Peripheriemoduls 1 beschreibbar ist. Dies ermöglicht dem Benutzer 23 die funktionsorientierte Zuordnung eines jeweiligen Namens (= String) zu den einzelnen Peripheriemodulen 1.

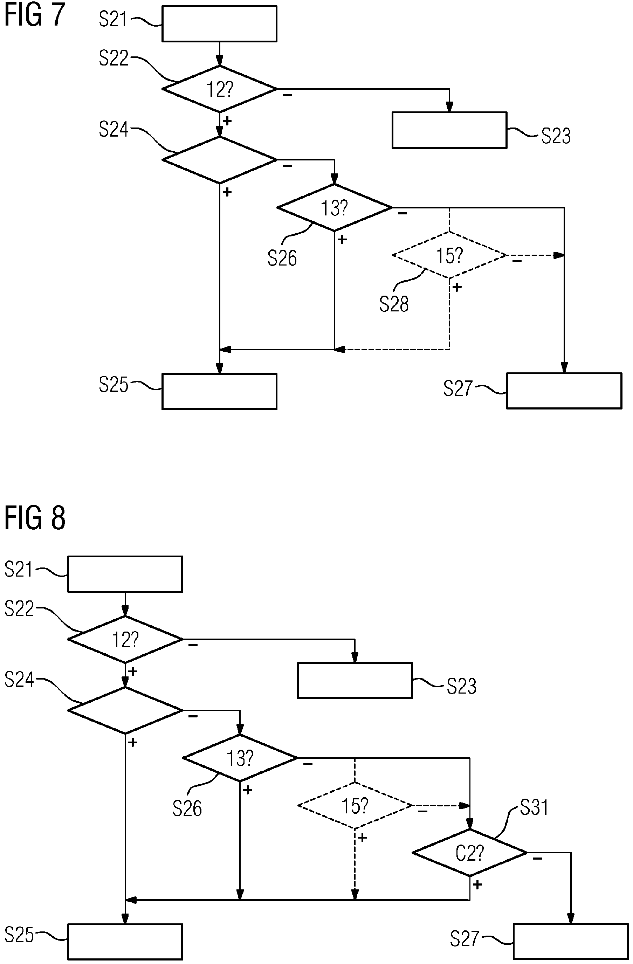

Die Peripheriemodule 1 sind vorzugsweise derart ausgebildet ist, dass der jeweilige zweite Speicherbereich 14 des jeweiligen Remanentspeichers 12 des jeweiligen Peripheriemoduls 1 über die jeweilige vorkonfektionierte Schnittstelle 4 nicht beschreibbar ist. Dies wird nachfolgend in Verbindung mit FIG 7 exemplarisch für eines der Peripheriemodule 1 näher erläutert. Die entsprechenden Ausführungen sind jedoch für alle Peripheriemodule 1 gültig.

Gemäß FIG 7 nimmt die Funktionsschaltung 11 des Peripheriemoduls 1 in einem Schritt S21 über die Schnittstelle 4 Daten entgegen. In einem Schritt S22 prüft die Funktionsschaltung 11, ob aufgrund der entgegengenommenen Daten ein Zugriff auf den Remanentspeicher 12 erfolgen soll. Wenn dies nicht der Fall ist, geht die Funktionsschaltung 11 zu einem Schritt S23 über, in dem sie eine geeignete Reaktion ausführt. Anderenfalls geht die Funktionsschaltung 11 zu einem Schritt S24 über. Im Schritt S24 prüft die Funktionsschaltung 11, ob der Zugriff auf den Remanentspeicher 12 ein lesender Zugriff sein soll. Wenn dies der Fall ist, führt die Funktionsschaltung 11 den Zugriff auf den Remanentspeicher 12 in einem Schritt S25 aus. Anderenfalls geht die Funktionsschaltung 11 zu einem Schritt S26 über.

Anderenfalls soll ein schreibender Zugriff auf den Remanentspeicher 12 erfolgen. In diesem Fall prüft die Funktionsschaltung 11 im Schritt S26, ob der schreibende Zugriff ein Zugriff auf den ersten Speicherbereich 13 ist. Wenn dies der Fall ist, geht die Funktionsschaltung 11 zum Schritt S25 über. Sie führt also den Zugriff auf den Remanentspeicher 12 aus. Auf diese Weise kann insbesondere der String 17 in den ersten Speicherbereich 13 eingeschrieben werden. Anderenfalls - also insbesondere, wenn versucht wird, Daten in den zweiten Speicherbereich 14 des Remanentspeichers 12 zuschreiben - geht die Funktionsschaltung 11 zu einem Schritt S27 über. Im Schritt S27 verweigert die Funktionsschaltung 11 die Ausführung des Schreibbefehls.

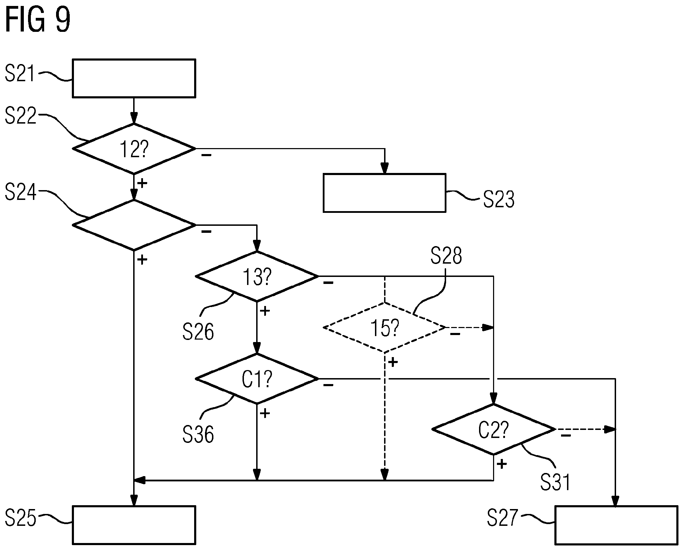

Es ist im Rahmen der Ausgestaltung von FIG 7 möglich, dass der schreibende Zugriff über die vorkonfektionierte Schnittstelle 4 auf den ersten Speicherbereich 13 durch ein Passwort geschützt ist (vergleiche die späteren Ausführungen zu FIG 9). Ein schreibender Zugriff über die vorkonfektionierte Schnittstelle 4 auf den zweiten Speicherbereich 14 ist im Rahmen der Ausgestaltung von FIG 7 jedoch keinesfalls möglich.

Im Rahmen der Vorgehensweise von FIG 7 ist vorausgesetzt, dass der Remanentspeicher 12 den ersten Speicherbereich 13 und den zweiten Speicherbereich 14 umfasst. Der dritte Speicherbereich 15 und/oder der vierte Speicherbereich 16 können alternativ vorhanden sein oder nicht vorhanden sein.

Falls der vierte Speicherbereich 16 vorhanden ist, können im vierten Speicherbereich 16 beispielsweise von der Funktionsschaltung 11 Daten hinterlegt werden, die im Rahmen des Betriebs des entsprechenden Peripheriemoduls 1 anfallen, beispielsweise dessen Betriebsdauer, Fehlermeldungen, weitere Betriebszustände und dergleichen mehr. Falls der vierte Speicherbereich 16 vorhanden ist, ist er im Rahmen der Ausgestaltung von FIG 7 ebenfalls nicht beschreibbar bzw. die Ausführung eines Schreibbefehls wird von der Funktionsschaltung 11 verweigert.

Falls der dritte Speicherbereich 15 vorhanden ist, kann im dritten Speicherbereich 15 beispielsweise ein Programm - oftmals als Firmware bezeichnet - hinterlegt sein, dass die Funktionsweise der Funktionsschaltung 11 und damit des Peripheriemoduls 1 bestimmt. Falls der dritte Speicherbereich 15 vorhanden ist, ist es möglich, dass er - analog zum vierten Speicherbereich 16 - ebenfalls nicht beschreibbar ist. Alternativ ist es möglich, dass der dritte Speicherbereich 15 beschreibbar ist. In diesem Fall ist entsprechend der gestrichelten Darstellung in FIG 7 vorzugsweise zusätzlich ein Schritt S28 vorhanden. Im Schritt S28 prüft die Funktionsschaltung 11, ob der schreibende Zugriff ein Zugriff auf den dritten Speicherbereich 15 ist. Wenn dies der Fall ist, geht die Funktionsschaltung 11 zum Schritt S25 über und führt somit den (schreibenden) Zugriff aus. Anderenfalls geht die Funktionsschaltung 11 zum Schritt S27 über und verweigert somit den (schreibenden) Zugriff. Soweit erforderlich, kann der Zugriff auf den dritten Speicherbereich 15 durch ein Passwort oder dergleichen geschützt sein.

Die Vorgehensweise von FIG 7 betrifft lediglich den Fall, dass versucht wird, einen schreibenden Zugriff auf den Remanentspeicher 12 über die vorkonfektionierte Schnittstelle 4 des Peripheriemoduls 1 auszuführen. Es kann daher zwar möglich sein, dass auch ein Beschreiben des zweiten Speicherbereichs 14 (und eventuell auch des dritten und/oder vierten Speicherbereichs 15, 16) prinzipiell möglich ist. In diesem Fall muss der schreibende Zugriff aber auf einem anderen Zugriffsweg erfolgen.

Alternativ ist es möglich, dass auch über die vorkonfektionierte Schnittstelle 4 ein schreibender Zugriff auf den zweiten Speicherbereich 14 prinzipiell - wenn auch nur unter restriktiven Bedingungen - möglich ist. In diesem Fall ist die Vorgehensweise von FIG 7 entsprechend der Darstellung in FIG 8 modifiziert.

FIG 8 umfasst ebenfalls die Schritte S21 bis S27 von FIG 7, eventuell zusätzlich auch den Schritt S28 von FIG 7. Zusätzlich ist jedoch dem Schritt S27 ein Schritt S31 vorgeordnet. Im Schritt S31 prüft die Funktionsschaltung 11, ihr über die vorkonfektionierte Schnittstelle 4 zusätzlich zum Schreibbefehl auch ein Schreibcode vorgegeben wird. Der Schreibcode spezifiziert - sofern es sich um den korrekten Schreibcode handelt - die Schreibbefugnis für den zweiten Speicherbereich 14. Insbesondere prüft die Funktionsschaltung 11 im Schritt S31, ihr überhaupt ein Schreibcode vorgegeben wird und ob dieser Schreibcode mit einem innerhalb des Peripheriemoduls 1 - beispielsweise im zweiten Speicherbereich 14 des Remanentspeichers 12 selbst - hinterlegten Schreibcode C2 (siehe FIG 3) übereinstimmt. Nur in diesem Fall, also im Fall der Übereinstimmung, geht die Funktionsschaltung 11 zum Schritt S25 über und führt den schreibenden Zugriff aus. Anderenfalls verweigert die Funktionsschaltung 11 - wie zuvor in Verbindung mit FIG 7 erläutert - den Zugriff.

In der Regel ist ein schreibender Zugriff auf den ersten Speicherbereich 13 uneingeschränkt möglich. Alternativ ist es jedoch möglich, dass die Peripheriemodule 1 derart ausgebildet sind, dass auch der jeweilige erste Speicherbereich 13 über die vorkonfektionierte Schnittstelle 4 nur dann beschreibbar ist, wenn dem Peripheriemodul 1 zusätzlich zu einem Schreibbefehl zum Beschreiben des ersten Speicherbereichs 13 ein die Schreibbefugnis spezifizierender Schreibcode vorgegeben wird. In diesem Fall weist der Schreibcode C2 zum Beschreiben des zweiten Speicherbereichs 14 ein höheres Schutzniveau auf als der Schreibcode C1 zum Beschreiben des ersten Speicherbereichs 13. Dies wird nachfolgend in Verbindung mit FIG 9 näher erläutert.

FIG 9 ist eine Ausgestaltung der Vorgehensweise von FIG 8. FIG 9 umfasst ebenfalls die Schritte S21 bis S27 sowie S31 von FIG 8, eventuell zusätzlich auch den Schritt S28 von FIG 8. Zusätzlich ist jedoch dem Schritt S26 ein Schritt S36 nachgeordnet. Im Schritt S36 prüft die Funktionsschaltung 11, ob ihr über die vorkonfektionierte Schnittstelle 4 zusätzlich zum Schreibbefehl auch ein Schreibcode vorgegeben wird. Der Schreibcode spezifiziert - sofern es sich um den korrekten Schreibcode handelt - die Schreibbefugnis für den ersten Speicherbereich 13. Insbesondere prüft die Funktionsschaltung 11 im Schritt S36, ihr überhaupt ein Schreibcode vorgegeben wird und ob dieser Schreibcode mit einem innerhalb des Peripheriemoduls 1 - beispielsweise im zweiten Speicherbereich 14 des Remanentspeichers 12 - hinterlegten Schreibcode C1 (siehe FIG 3) übereinstimmt. Nur in diesem Fall, also im Fall der Übereinstimmung, geht die Funktionsschaltung 11 zum Schritt S25 über und führt den schreibenden Zugriff aus. Anderenfalls verweigert die Funktionsschaltung 11 - wie zuvor in Verbindung mit FIG 8 für den zweiten Speicherbereich 14 erläutert - den Zugriff. Der guten Ordnung halber sei in diesem Zusammenhang erwähnt, dass die Funktionsschaltung 11 im Rahmen des Schrittes S36 in der Regel auch prüft, ob ihr alternativ zum Schreibcode C1 der Schreibcode C2 vorgegeben wird. Denn eine Befugnis zum Beschreiben des zweiten Speicherbereichs 14 impliziert in der Regel auch eine Befugnis zum Beschreiben des ersten Speicherbereichs 13.

Der Unterschied zwischen den Schreibcodes C1 und C2 liegt zum einen darin, dass der Schreibcode C1 in der Regel dem Benutzer 23 bekannt ist, beispielsweise in einem Handbuch enthalten ist. Der Schreibcode C2 ist - sofern überhaupt ein schreibender Zugriff auf den zweiten Speicherbereich 14 über die vorkonfektionierte Schnittstelle 4 möglich ist - hingegen geheim und nur dem Hersteller des Peripheriemoduls 1 bekannt. Zum Schutz vor einem Brechen des Schreibcodes C2 weist weiterhin der Schreibcode C2 ein höheres Schutzniveau auf als der Schreibcode C1. Beispielsweise kann der Schreibcode C2 aus acht alphanumerischen Zeichen bestehen, welche sowohl Ziffern als auch Großbuchstaben sein können. Der Schreibcode C1 kann im Gegensatz hierzu beispielsweise aus vier Ziffern bestehen. Sowohl die größere Länge des Schreibcodes C2 als auch die größere Zeichenvielfalt der einzelnen Zeichen des Schreibcodes C2 bewirken ein höheres Schutzniveau.

Es ist entsprechend der Darstellung in FIG 2 möglich, dass die Peripheriemodule 1 eine Anzeigeeinrichtung 25 aufweisen. In diesem Fall ist es möglich, dass der im ersten Speicherbereich 13 des Remanentspeichers 12 des jeweiligen Peripheriemoduls 1 gespeicherte String 17 über die Anzeigeeinrichtung 25 angezeigt wird. Es ist möglich, dass diese Anzeige permanent erfolgt, also jederzeit, solange das entsprechende Peripheriemodul 1 mit elektrischer Energie versorgt wird. Alternativ ist es möglich, dass diese Anzeige temporär erfolgt, beispielsweise für begrenzte Zeit nach einem Beginn der Energieversorgung oder nach Eingabe eines Abrufbefehls über die vorkonfektionierte Schnittstelle 4 oder auf andere Weise. Dadurch kann auf besonders zuverlässige Weise gewährleistet werden, dass das jeweils "richtige" Peripheriemodul 1 verwendet wird.

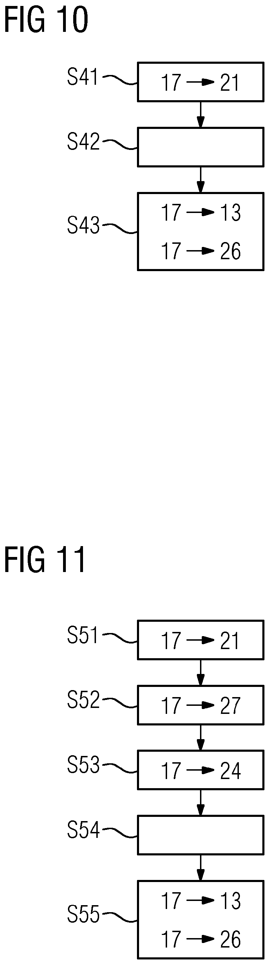

Das Vorsehen einer Anzeigeeinrichtung 25 an den Peripheriemodulen 1 stellt einen nennenswerten Kostenfaktor dar. Diese Kosten können dadurch vermieden werden, dass das Programmiergerät 21 gemäß FIG 6 einen integrierten Drucker (nicht dargestellt) aufweist oder mit einem externen Drucker 26 verbindbar ist. In diesem Fall ist das Programmiergerät 21 derart ausgebildet (beispielsweise programmiert), dass es in zwangsweiser Kopplung mit dem Einschreiben des Strings 17 in den ersten Speicherbereich 13 des Remanentspeichers 12 des jeweils mit dem Programmiergerät 21 verbundenen Peripheriemoduls 1 einen Druckauftrag zum Drucken des Strings 17 an den Drucker 26 übermittelt. Dadurch steht - sofort oder nur wenige Sekunden nach dem Einschreiben des Strings 17 in den ersten Speicherbereich 13 - ein Ausdruck des Strings 17 zur Verfügung. Wenn der Ausdruck beispielsweise auf ein Klebeetikett erfolgt, kann das Klebeetikett sofort und unmittelbar auf das entsprechende Peripheriemodul 1 aufgeklebt werden, so dass der Benutzer 23 später ohne weiteres erkennen kann, welchen String 17 er in den ersten Speicherbereich 13 des entsprechenden Peripheriemoduls 1 eingeschrieben hat. Dies wird nachfolgend in Verbindung mit FIG 10 näher erläutert.

Gemäß FIG 10 nimmt das Programmiergerät 21 in einem Schritt S41 über die Eingabeeinrichtung 22 vom Benutzer 23 einen String 17 entgegen. Das Programmiergerät 21 speichert den String 17 in einem internen Speicher 27 (siehe FIG 6). Weiterhin gibt es den String 17 während der Eingabe durch den Benutzer 23 über die Ausgabeeinrichtung 24 an den Benutzer 23 aus. In einem Schritt S42 wartet das Programmiergerät 21 die Eingabe eines Ausführungsbefehls durch den Benutzer 23 ab. Wenn dem Programmiergerät 21 dieser Ausführungsbefehl vorgegeben wird, geht das Programmiergerät 21 zu einem Schritt S43 über. Im Schritt S43 führt das Programmiergerät 21 zwei Aktionen aus. Zum einen schreibt das Programmiergerät 21 den im Speicher 27 enthaltenen String 17 in den ersten Speicherbereich 13 des Remanentspeichers 12 des angeschlossenen Peripheriemoduls 1 ein. Zum anderen übermittelt das Programmiergerät 21 einen Druckauftrag zum Drucken des Strings 17 an den (nicht dargestellten) internen Drucker oder an den externen Drucker 26.

In einer weiter bevorzugten Ausgestaltung ist das Programmiergerät 21 in der Lage, den für den String 17 vorgesehenen ersten Speicherbereich 13 des Remanentspeichers 12 des jeweils angeschlossenen Peripheriemoduls 1 auszulesen. Diese Fähigkeit - die als solche ohne weiteres realisierbar ist - kann zu verschiedenen Zwecken genutzt werden. Dies wird nachfolgend in Verbindung mit FIG 11 näher erläutert.

Gemäß FIG 11 liest das Programmiergerät 21 in einem Schritt S51 den Inhalt des ersten Speicherbereichs 13 aus. Der Schritt S51 kann beispielsweise automatisch durch das Verbinden eines Peripheriemoduls 1 mit dem Programmiergerät 21 ausgelöst werden. Alternativ ist es möglich, dass der Benutzer 23 das Auslesen durch einen entsprechenden Befehl auslöst. Den ausgelesenen Inhalt des ersten Speicherbereichs 13 speichert das Programmiergerät 21 in einem Schritt S52 in dem internen Speicher 27 ab. Weiterhin wird der Inhalt des internen Speichers 27 (der mit dem String 17 übereinstimmt) in einem Schritt S53 an den Benutzer 23 ausgegeben. Durch diese Vorgehensweise kann auf sehr einfache Weise überprüft werden, welcher Name (= String 17) im ersten Speicherbereich 13 des Remanentspeichers 12 des angeschlossenen Peripheriemoduls 1 hinterlegt ist.

Der im internen Speicher 27 hinterlegte Inhalt kann - nicht aber muss - vom Benutzer 23 in einem Schritt S54 gesichert werden. Das Sichern hat zur Folge, dass nach dem Trennen des Peripheriemoduls 1 vom Programmiergerät 21 und dem Anschließen eines anderen Peripheriemoduls 1 mit dem Programmiergerät 21 der im internen Speicher 27 hinterlegte Inhalt erhalten bleibt. Nach dem Sichern des Schrittes S54 wird beim Verbinden des anderen Peripheriemoduls 1 also entweder der Inhalt von dessen erstem Speicherbereich 13 nicht ausgelesen oder der Inhalt wird zwar ausgelesen, nicht aber im internen Speicher 27, sondern an anderer Stelle hinterlegt. Der Benutzer 23 kann daher dem Programmiergerät 21 zu einem späteren Zeitpunkt einen Befehl vorgegeben, so dass das Programmiergerät 21 in einem nachfolgenden Schritt S55 den ausgelesenen und im internen Speicher 27 zwischengespeicherten Inhalt als (neuen) String 17 in den ersten Speicherbereich 13 des Remanentspeichers 12 desjenigen Peripheriemoduls 1 einschreibt, das zum Zeitpunkt der Ausführung des Schrittes S55 mit dem Programmiergerät 21 verbunden ist. Das Einschreiben erfolgt - wie zuvor - über die vorkonfektionierten Schnittstellen 4, 20 und das Verbindungskabel 19. Für das Einschreiben ist es - aus Sicht des Programmiergeräts 21 - irrelevant, ob das Peripheriemodul 1 zwischenzeitlich gewechselt wurde oder nicht. Die Ausführung des Schrittes S55 bewirkt vorzugsweise zugleich, dass die Sicherung des Schrittes S54 aufgehoben wird. Die Ausführung des Schrittes S55 bewirkt vorzugsweise weiterhin zugleich, dass ein entsprechender Druckauftrag an den Drucker 26 übermittelt wird, vergleiche die Ausführungen zum Schritt S43.

Wie obenstehend in Verbindung mit FIG 7 bereits erläutert, sind in der Regel nur schreibende Zugriffe auf den Remanentspeicher 12 - insbesondere den zweiten Speicherbereich 14, eventuell aber auch auf den dritten Speicherbereich 15 und/ oder den vierten Speicherbereich 16 - gesperrt bzw. passwortgeschützt. Lesende Zugriffe sind hingegen in der Regel ohne Einschränkung möglich. Es ist für Fachleute ohne weiteres möglich, eine beliebige Einrichtung derart auszugestalten, dass sie derartige lesende Zugriffe ausführen kann. Auch das Programmiergerät 21 kann derart ausgestaltet sein. Das Programmiergerät 21 kann also in der Lage sein, über die vorkonfektionierten Schnittstellen 4, 20 und das Verbindungskabel 19 Daten, die im zweiten Speicherbereich 14 des Remanentspeichers 12 des Peripheriemoduls 1 gespeichert sind, auszulesen. In analoger Weise kann das Programmiergerät 21 in der Lage sein, über die vorkonfektionierten Schnittstellen 4, 20 und das Verbindungskabel 19 Daten, die im vierten Speicherbereich 16 des Remanentspeichers 12 des Peripheriemoduls 1 gespeichert sind, auszulesen. Die ausgelesenen Daten können vom Programmiergerät 21 - selbstverständlich - mittels der Ausgabeeinrichtung 24 an den Benutzer 23 ausgegeben werden.

Weiterhin ist es ohne weiteres möglich, das Programmiergerät 21 derart auszugestalten, dass es in der Lage ist, über die vorkonfektionierten Schnittstellen 4, 20 und das Verbindungskabel 19 einen Funktionstest des Peripheriemoduls 1 zu initiieren. In diesem Fall nimmt das Programmiergerät 21 über die vorkonfektionierten Schnittstellen 4, 20 und das Verbindungskabel 19 vom Peripheriemodul 1 Ergebnisdaten des Funktionstests entgegen. Auch die Ergebnisdaten können von dem Programmiergerät 21 mittels der Ausgabeeinrichtung 24 an den Benutzer 23 ausgegeben werden.

Weiterhin ist es möglich, dass das Programmiergerät 21 die aus dem zweiten und/oder vierten Speicherbereich 14, 16 ausgelesenen Daten und/oder die Ergebnisdaten an einen weiteren Rechner (nicht dargestellt) übermittelt. Das Programmiergerät 21 kann zu diesem Zweck beispielsweise gemäß FIG 6 einen USB-Port 28 zum Anschließen eines USB-Memorystick und/oder eine E-Mail-Funktionalität umfassen.

Wie ebenfalls obenstehend in Verbindung mit FIG 7 bereits erläutert, kann im dritten Speicherbereich 15 des Remanentspeichers 12 ein Programm hinterlegt sein, dass von der Funktionsschaltung 11 im Betrieb des entsprechenden Peripheriemoduls 1 ausgeführt wird. Wie weiterhin ebenfalls bereits obenstehend in Verbindung mit FIG 7 erläutert, können schreibende Zugriffe auf den dritten Speicherbereich 15 des Remanentspeichers 12 - sei es mit oder ohne Passwortschutz - über die vorkonfektionierte Schnittstelle 4 möglich sein. Es ist für Fachleute ohne weiteres möglich, eine beliebige Einrichtung derart auszugestalten, dass sie derartige schreibende Zugriffe ausführen kann. Auch das Programmiergerät 21 kann derart ausgestaltet sein. Das Programmiergerät 21 kann also in der Lage sein, über die vorkonfektionierten Schnittstellen 4, 20 und das Verbindungskabel 19 Programmdaten in den dritten Speicherbereich 15 des Remanentspeichers 12 des Peripheriemoduls 1 einzuschreiben.

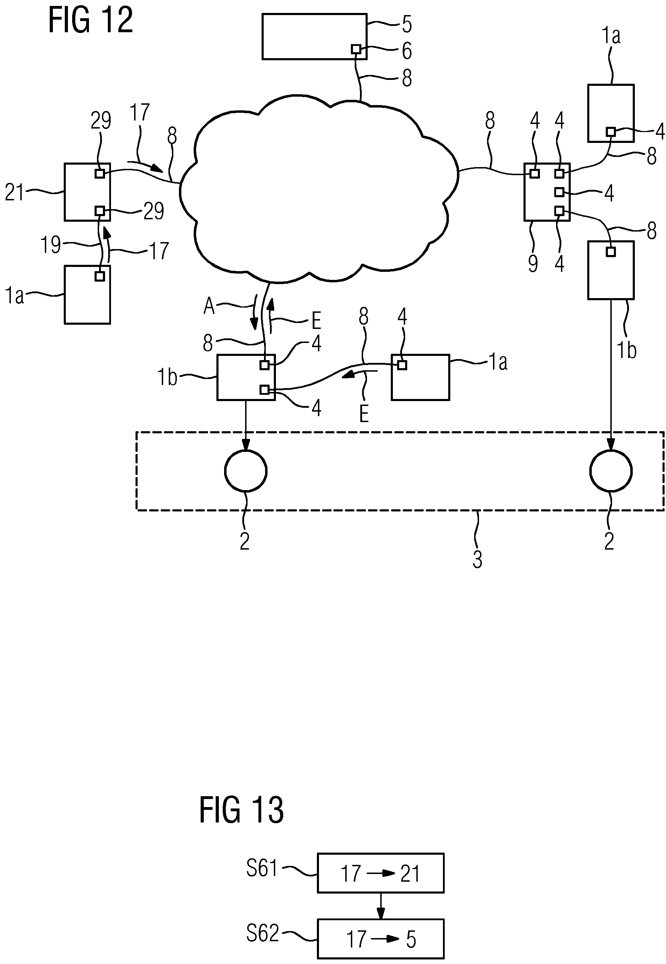

Das Programmiergerät 21 kann beispielsweise als Laptop, als Notebook oder als anderer (vollwertiger) Rechner ausgebildet sein. Alternativ kann es sich bei dem Programmiergerät 21 um ein spezielles Programmiergerät handeln. Im letztgenannten Fall kann das Programmiergerät 21 als sogenanntes Handheld ausgebildet sein. Unabhängig von der Ausgestaltung des Programmiergeräts 21 weist das Programmiergerät 21 jedoch in den weitaus meisten Konfigurationen nur eine einzige vorkonfektionierte Schnittstelle 20 auf, das heißt nur eine einzige Schnittstelle, über die mittels des Verbindungskabels 19 jeweils ein Peripheriemodul 1 angeschlossen werden kann. Es ist jedoch alternativ möglich, dass auf dem Programmiergerät 21 zusätzlich zu der vorkonfektionierten Schnittstelle 20 mindestens eine - in der Regel genau eine - weitere derartige vorkonfektionierte Schnittstelle 29 angeordnet ist. In diesem Fall ist eine zusätzliche Funktionalität realisierbar, die nachstehend in Verbindung mit den FIG 12 und 13 erläutert wird.

FIG 12 zeigt im wesentlichen das gleiche verteilte Steuerungssystem die FIG 1. Im Unterschied zu FIG 1 ist jedoch eines der Peripheriemodul 1 nicht direkt, sondern über das Programmiergerät 21 mit der Steuereinrichtung 5 verbunden. Das von diesem Peripheriemodul 1 abgehende Verbindungskabel 19 ist also mit der vorkonfektionierten Schnittstelle 20 des Programmiergeräts 21 verbunden. Von der weiteren vorkonfektionierten Schnittstelle 29 des Programmiergeräts 21 geht ein weiteres Verbindungskabel 8 zum Verbindungsnetzwerk 7 hin. Falls mehrere Programmiergeräte 21 verfügbar sind, könnten - entsprechend der Anzahl an verfügbaren Programmiergeräten 21 - auch mehrere Peripheriemodule 1 auf diese Art und Weise mit dem Verbindungsnetzwerk 7 verbunden sein.

Im Falle der Ausgestaltung von FIG 12 liest das Programmiergerät 21 gemäß FIG 13 in einem Schritt S61 den für den String 17 vorgesehenen ersten Speicherbereich 13 des Remanentspeichers 12 des entsprechenden Peripheriemoduls 1 über die vorkonfektionierte Schnittstelle 20 des Programmiergeräts 21, das Verbindungskabel 19 und die vorkonfektionierte Schnittstelle 4 des Peripheriemoduls 1 aus. Weiterhin gibt das Programmiergerät 21 in einem Schritt S62 den ausgelesenen Inhalt - also den String 17 - über die weitere vorkonfektionierte Schnittstelle 29 und das Verbindungskabel 8 an die Steuereinrichtung 5 des verteilten Steuerungssystems aus. Das Programmiergerät 21 implementiert also die Funktionalität, dass das Peripheriemodul 1 sich über das Programmiergerät 21 mit seinem "Namen" bei der Steuereinrichtung 5 "meldet".

Durch die erfindungsgemäßen Ausgestaltungen wird es somit auf einfache Weise möglich, dass der Benutzer 23 den Peripheriemodulen 1 Namen (= Strings 17) zuordnet. Dies steht im Gegensatz zum Stand der Technik, in dem die Zuordnung der Namen vom Hersteller der Peripheriemodule 1 vorgenommen wird. Dadurch ist der Benutzer 23 in der Lage, die Namen derart zu bestimmen, dass sie für ihn leicht verständlich sind. Die Handhabbarkeit für den Benutzer 23 wird dadurch deutlich erleichtert. Die Namen müssen weiterhin nicht notwendigerweise für alle vom Hersteller produzierten Peripheriemodule 1 voneinander verschieden sein. Es ist lediglich erforderlich, dass die Namen der innerhalb des verteilten Steuerungssystems verwendeten Peripheriemodule 1 das jeweilige Peripheriemodul 1 eindeutig identifizieren.

Zusammengefasst betrifft die vorliegende Erfindung somit folgenden Sachverhalt:
Peripheriemodule 1 eines verteilten Steuerungssystems sind als Motormodule 1b oder als Sensormodule 1a ausgebildet. Die Peripheriemodule 1 sind über auf den Peripheriemodulen 1 angeordnete einheitlich vorkonfektionierte Schnittstellen 4 direkt oder indirekt über ein Verbindungsnetzwerk 7 mit einer Steuereinrichtung 5 verbunden. Vor einer Inbetriebnahmephase des verteilten Steuerungssystems wird über die Schnittstelle 4 des jeweiligen Peripheriemoduls 1 ein String 17 in einen ersten Speicherbereich 13 eines Remanentspeichers 12 des jeweiligen Peripheriemoduls 1 eingeschrieben. In der Inbetriebnahmephase lesen die Peripheriemodule 1 ihre Strings 17 aus den ersten Speicherbereichen 13 aus und übermitteln die Strings 17 an die Steuereinrichtung 5. Die Steuereinrichtung 5 ermittelt anhand der Strings 17 selbsttätig die Zuordnung der Peripheriemodule 1 zu ihren Steuerungsaufgaben SA. Im Normalbetrieb des Steuerungssystems nimmt die Steuereinrichtung 5 von den Sensormodulen 1a über die jeweilige Schnittstelle 4 des jeweiligen Sensormoduls 1a Eingangsgrößen E entgegen. Sie ordnet die Eingangsgrößen E der jeweiligen Steuerungsaufgabe SA zu, ermittelt durch Abarbeitung der jeweiligen Steuerungsaufgabe SA jeweilige Ausgangsgrößen A und übermittelt die jeweiligen Ausgangsgrößen A an mindestens ein der jeweiligen Steuerungsaufgabe SA zugeordnetes Motormodul 1b, und zwar über die jeweilige vorkonfektionierte Schnittstelle 4 des jeweiligen Motormoduls 1b.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang der Erfindung ist durch die folgenden Ansprüche definiert.

## Patentansprüche

1. Betriebsverfahren für ein verteiltes Steuerungssystem,
- wobei das Steuerungssystem eine Mehrzahl von als Sensormodule (1a) ausgebildeten Peripheriemodulen (1) und eine Mehrzahl von als Motormodule (1b) ausgebildeten Peripheriemodulen (1) umfasst,
- wobei die Peripheriemodule (1) über auf den Peripheriemodulen (1) angeordnete einheitlich vorkonfektionierte Schnittstellen (4) direkt oder indirekt über ein Verbindungsnetzwerk (7) mit einer Steuereinrichtung (5) verbunden sind,
- wobei die Steuereinrichtung (5) in einem Normalbetrieb des Steuerungssystems von als Sensormodule (1a) ausgebildeten Peripheriemodulen (1) über die jeweilige vorkonfektionierte Schnittstelle (4) des jeweiligen Peripheriemoduls (1) Eingangsgrößen (E) entgegennimmt, die Eingangsgrößen (E) der jeweiligen Steuerungsaufgabe (SA) zuordnet, in Abhängigkeit von den der jeweiligen Steuerungsaufgabe (SA) zugeordneten Eingangsgrößen (E) durch Abarbeitung der jeweiligen Steuerungsaufgabe (SA) jeweilige Ausgangsgrößen (A) ermittelt und die ermittelten jeweiligen Ausgangsgrößen (A) an mindestens ein der jeweiligen Steuerungsaufgabe (SA) zugeordnetes, als Motormodul (1b) ausgebildetes Peripheriemodul (1) über die jeweilige vorkonfektionierte Schnittstelle (4) des jeweiligen Peripheriemoduls (1) übermittelt
- wobei vor einer Inbetriebnahmephase des verteilten Steuerungssystems über die vorkonfektionierte Schnittstelle (4) des jeweiligen Peripheriemoduls (1) ein String (17) in einen ersten Speicherbereich (13) eines Remanentspeichers (12) des jeweiligen Peripheriemoduls (1) eingeschrieben wird,
und wobei der im Remanentspeicher (12) gespeicherte Inhalt auch dann erhalten bleibt, wenn das jeweilige Peripheriemodul (1) von einer Energieversorgung getrennt wird,
wobei der String (17) als alphanumerische Zeichenkette ausgestaltet wird, und wobei der String (17) durch einen Benutzer definiert wird, und
- wobei die Peripheriemodule (1) im Rahmen einer dem Normalbetrieb vorausgehenden Inbetriebnahmephase des Steuerungssystems den String (17) aus dem ersten Speicherbereich (13) des Remanentspeichers (12) des jeweiligen Peripheriemoduls (1) auslesen und an die Steuereinrichtung (5) übermitteln und
- wobei die Steuereinrichtung (5) anhand der übermittelten Strings (17) selbsttätig die Zuordnung der Peripheriemodule (1) zu der jeweiligen Steuerungsaufgabe (SA) ermittelt.

2. Betriebsverfahren nach Anspruch 1, **dadurch gekennzeichnet, dass** die Peripheriemodule (1) im Rahmen der Inbetriebnahmephase des Steuerungssystems aus einem zweiten Speicherbereich (14) des Remanentspeichers (12) des jeweiligen Peripheriemoduls (1) eine für das jeweilige Peripheriemodul (1) spezifische Adresse (18) auslesen und die jeweilige spezifische Adresse (18) zusammen mit dem jeweiligen String (17) an die Steuereinrichtung (5) übermitteln, dass die als Sensormodule (1a) ausgebildeten Peripheriemodule (1) im Normalbetrieb des Steuerungssystems ihre jeweiligen Eingangsgrößen (E) zusammen mit ihrer jeweiligen spezifischen Adresse (18) an die Steuereinrichtung (5) übermitteln und dass die Steuereinrichtung (5) im Normalbetrieb des Steuerungssystems die jeweiligen Ausgangsgrößen (A) zusammen mit der jeweiligen spezifischen Adresse (18) der als Motormodule (1b) ausgebildeten Peripheriemodule (1) an das jeweilige als Motormodul (1b) ausgebildete Peripheriemodul (1) übermittelt.

3. Betriebsverfahren nach Anspruch 2, **dadurch ge**k**ennzeichnet,** dass die Adressen (18) eine erheblich geringere Länge als die Strings (17) aufweisen.

4. Betriebsverfahren nach Anspruch 2 oder 3, **dadurch gekennzeichnet , dass** die Peripheriemodule (1) nach dem Entgegennehmen eines Schreibbefehls für den jeweiligen Remanentspeicher (12) prüfen, ob mittels des Schreibbefehls über die vorkonfektionierte Schnittstelle (4) Daten in den jeweiligen zweiten Speicherbereich (14) des Remanentspeichers (12) des jeweiligen Peripheriemoduls (1) geschrieben werden sollen, und die Ausführung des Schreibbefehls in diesem Fall verweigern.

5. Betriebsverfahren nach Anspruch 2 oder 3, **dadurch gekennzeichnet , dass** die Peripheriemodule (1) nach dem Entgegennehmen eines Schreibbefehls für den jeweiligen Remanentspeicher (12) prüfen, ob mittels des Schreibbefehls über die vorkonfektionierte Schnittstelle (4) Daten in den jeweiligen zweiten Speicherbereich (14) des Remanentspeichers (12) des jeweiligen Peripheriemoduls (1) geschrieben werden sollen, und dass die Peripheriemodule (1) den Schreibbefehl nur dann ausführen, wenn dem jeweiligen Peripheriemodul (1) über die vorkonfektionierte Schnittstelle (4) zusätzlich zum Schreibbefehl ein die Schreibbefugnis spezifizierender Schreibcode vorgegeben wird, und anderenfalls die Ausführung des Schreibbefehls verweigern.

6. Betriebsverfahren nach Anspruch 5, **dadurch gekennzeichne**t, dass die Peripheriemodule (1) nach dem Entgegennehmen eines Schreibbefehls für den jeweiligen Remanentspeicher (12) prüfen, ob mittels des Schreibbefehls über die vorkonfektionierte Schnittstelle (4) Daten in den jeweiligen ersten Speicherbereich (13) des Remanentspeichers (12) des jeweiligen Peripheriemoduls (1) geschrieben werden sollen, dass die Peripheriemodule (1) den Schreibbefehl nur dann ausführen, wenn dem jeweiligen Peripheriemodul (1) über die vorkonfektionierte Schnittstelle (4) zusätzlich zum Schreibbefehl ein die Schreibbefugnis spezifizierender Schreibcode vorgegeben wird, und anderenfalls die Ausführung des Schreibbefehls verweigern und dass der Schreibcode zum Beschreiben des jeweiligen zweiten Speicherbereichs (14) ein höheres Schutzniveau aufweist als der Schreibcode zum Beschreiben des jeweiligen ersten Speicherbereichs (13).

7. Betriebsverfahren nach einem der obigen Ansprüche, **dadurch gekennzeichnet, dass** die Steuereinrichtung (5) die übermittelten Strings (17) mit einer der Steuereinrichtung (5) vorgegebenen Liste von Strings vergleicht und dass die Steuereinrichtung (5) eine Fehlermeldung ausgibt, wenn die übermittelten Strings von den in der vorgegebenen Liste von Strings enthaltenen Strings abweichen.

8. Betriebsverfahren nach einem der obigen Ansprüche, **dadurch gekennzeichnet, dass** die Strings (17) eine maximal zulässige Länge aufweisen und dass die maximal zulässige Länge mindestens 32 Zeichen ist.

9. Peripheriemodul für ein verteiltes Steuerungssystem,
- wobei das Peripheriemodul als Sensormodul (1a) oder als Motormodul (1b) ausgebildet ist,
- wobei auf dem Peripheriemodul eine vorkonfektionierte Schnittstelle (4) angeordnet ist, über die das Peripheriemodul direkt oder indirekt mit einer Steuereinrichtung (5) verbindbar ist,
- wobei das Peripheriemodul derart ausgebildet ist, dass es in einem Normalbetrieb des Steuerungssystems über die vorkonfektionierte Schnittstelle (4) Eingangsgrößen (E) an die Steuereinrichtung (5) des Steuerungssystems übermittelt, falls es als Sensormodul (1a) ausgebildet ist, und über die vorkonfektionierte Schnittstelle (4) von der Steuereinrichtung (5) Ausgangsgrößen (A) entgegennimmt, falls es als Motormodul (1b) ausgebildet ist,
- wobei das Peripheriemodul derart ausgebildet ist, dass es im Rahmen einer dem Normalbetrieb vorausgehenden Inbetriebnahmephase des Steuerungssystems aus einem ersten Speicherbereich (13) eines Remanentspeichers (12) des Peripheriemoduls einen String (17) ausliest und an die Steuereinrichtung (5) übermittelt, wobei der String (17) als alphanumerische Zeichenkette ausgebildet ist, und wobei der String durch ein Benutzer definiert ist, und wobei der Remanentspeicher so ausgestaltet ist das der im Remanentspeicher gespeicherte Inhalt auch dann erhalten bleibt, wenn das jeweilige Peripheriemodule von einer Energieversorgung getrennt ist, und
- wobei das Peripheriemodul derart ausgebildet ist, dass der erste Speicherbereich (13) über die vorkonfektionierte Schnittstelle (4) des Peripheriemoduls beschreibbar ist.

10. Peripheriemodul nach Anspruch 9, **dadurch gekennzeichnet, dass** dass das Peripheriemodul derart ausgebildet ist, dass es im Rahmen der Inbetriebnahmephase des Steuerungssystems aus einem zweiten Speicherbereich (14) des Remanentspeichers (12) eine für das Peripheriemodul spezifische Adresse (18) ausliest und zusammen mit dem String (17) an die Steuereinrichtung (5) übermittelt, dass es im Normalbetrieb seine jeweiligen Eingangsgrößen (E) zusammen mit seiner jeweiligen spezifischen Adresse (18) an die Steuereinrichtung (5) übermittelt, falls es als Sensormodul (1a) ausgebildet ist, und von der Steuereinrichtung (5) seine Ausgangsgrößen (A) zusammen mit der jeweiligen spezifischen Adresse (18) entgegennimmt, falls es als Motormodul (1b) ausgebildet ist.

11. Peripheriemodul nach Anspruch 10, **dadurch gekennzeichnet,dass** die Adresse (18) eine erheblich geringere Länge als der String (17) aufweist.

12. Peripheriemodul nach Anspruch 10 oder 11, **dadurch gekennzeichnet, dass** das Peripheriemodul derart ausgebildet ist, dass der zweite Speicherbereich (14) über die vorkonfektionierte Schnittstelle (4) nicht beschreibbar ist.

13. Peripheriemodul nach Anspruch 10 oder 11, **dadurch gekennzeichnet, dass** das Peripheriemodul derart ausgebildet ist, dass der zweite Speicherbereich (14) über die vorkonfektionierte Schnittstelle (4) nur dann beschreibbar ist, wenn dem Peripheriemodul zusätzlich zu einem Schreibbefehl zum Beschreiben des zweiten Speicherbereichs (14) ein die Schreibbefugnis spezifizierender Schreibcode vorgegeben wird.

14. Peripheriemodul nach Anspruch 13, **dadurch gekennzeichnet, dass** das Peripheriemodul derart ausgebildet ist, dass auch der erste Speicherbereich (13) über die vorkonfektionierte Schnittstelle (4) nur dann beschreibbar ist, wenn dem Peripheriemodul zusätzlich zu einem Schreibbefehl zum Beschreiben des ersten Speicherbereichs (13) ein die Schreibbefugnis spezifizierender Schreibcode vorgegeben wird und dass der Schreibcode zum Beschreiben des jeweiligen zweiten Speicherbereichs (14) ein höheres Schutzniveau aufweist als der Schreibcode zum Beschreiben des jeweiligen ersten Speicherbereichs (13).

15. Peripheriemodul nach einem der Ansprüche 9 bis 14, **da**d**u**rch **gekennzeichnet** , dass der String (17) eine maximal zulässige Länge aufweist und dass die maximal zulässige Länge größer als 32 Zeichen ist.

16. Peripheriemodul nach einem der Ansprüche 9 bis 15, **dadurch gekennzeichnet, dass** das Peripheriemodul eine Anzeigeeinrichtung (25) aufweist, über welche der im ersten Speicherbereich (13) des Remanentspeichers (12) des Peripheriemoduls gespeicherte String (17) permanent oder temporär angezeigt wird.

17. Programmiergerät für ein Peripheriemodul (1) eines verteilten Steuerungssystems, das als Sensormodul (1a) oder als Motormodul (1b) ausgebildet ist,
- wobei auf dem Programmiergerät eine vorkonfektionierte Schnittstelle (20) angeordnet ist, über welche das Programmiergerät mittels eines Verbindungskabels (19) mit einer korrespondierenden Schnittstelle (4) des Peripheriemoduls (1) verbindbar ist,
- wobei das Programmiergerät eine Eingabeeinrichtung (22) aufweist, mittels derer dem Programmiergerät von einem Benutzer (23) des Programmiergeräts ein String (17) vorgebbar ist,
- wobei das Programmiergerät eine Ausgabeeinrichtung (24) aufweist, mittels derer der dem Programmiergerät vorgegebene String (17) an den Benutzer (23) ausgebbar ist,
- wobei das Programmiergerät derart ausgebildet ist, dass es den String (17) über die vorkonfektionierten Schnittstellen (4, 20) und das Verbindungskabel (19) in einen ersten Speicherbereich (13) eines Remanentspeichers (12) des Peripheriemoduls (1) einschreibt und wobei der im Remanentspeicher (12) gespeicherte Inhalt auch dann erhalten bleibt, wenn das jeweilige Pheriperhiemodul (1) von einer Energieversorgung getrennt wird,
wobei der String (17) als alphanumerische Zeichenkette ausgestaltet ist, und wobei der String (17) durch einen Benutzer definierbar ist.

18. Programmiergerät nach Anspruch 17, **dadurch gekennzeichnet, dass** das Programmiergerät einen integrierten Drucker aufweist oder mit einem externen Drucker (26) verbindbar ist und dass das Programmiergerät derart ausgebildet ist, dass es in zwangsweiser Kopplung mit dem Ein schreiben des Strings (17) in den ersten Speicherbereich (13) des Remanentspeichers (12) des Peripheriemoduls (1) einen Druckauftrag zum Drucken des Strings (17) an den Drucker (26) übermittelt.

19. Programmiergerät nach Anspruch 17 oder 18, **dadurch gekennzeichnet , dass** das Programmiergerät in der Lage ist, den für den String (17) vorgesehenen ersten Speicherbereich (13) des Remanentspeichers (12) des Peripheriemoduls (1) auszulesen und dessen Inhalt mittels der Ausgabeeinrichtung (24) an den Benutzer (23) auszugeben.

20. Programmiergerät nach Anspruch 19, **dadurch gekennzeichnet, dass** das Programmiergerät den ausgelesenen Inhalt zwischenspeichert und den ausgelesenen Inhalt zu einem späteren Zeitpunkt - unabhängig davon, ob zwischenzeitlich das Peripheriemodul (1) gewechselt wurde oder nicht - als String (17) über die vorkonfektionierten Schnittstellen (4, 20) und das Verbindungskabel (19) in den ersten Speicherbereich (13) des Remanentspeichers (12) des zu dem späteren Zeitpunkt mit dem Programmiergerät verbundenen Peripheriemoduls (1) einschreibt.

21. Programmiergerät nach einem der Ansprüche 17 bis 20, **dadurch gekennzeichnet, dass** das Programmiergerät in der Lage ist, über die vorkonfektionierten Schnittstellen (4, 20) und das Verbindungskabel (19) Daten, die in einem zweiten Speicherbereich (14) des Remanentspeichers (12) des Peripheriemoduls (1) gespeichert sind, auszulesen und die Daten mittels der Ausgabeeinrichtung (24) an den Benutzer (23) auszugeben.

22. Programmiergerät nach Anspruch 21, **dadurch** g**ekennzeichnet**, dass das Programmiergerät in der Lage ist, die ausgelesenen Daten an einen weiteren Rechner zu übermitteln.

23. Programmiergerät nach einem der Ansprüche 17 bis 22, **dadurch gekennzeichnet, dass** das Programmiergerät in der Lage ist, über die vorkonfektionierten Schnittstellen 4, 20) und das Verbindungskabel (19) einen Funktionstest des Peripheriemoduls (1) zu initiieren, über die vorkonfektionierten Schnittstellen 4, 20) und das Verbindungskabel (19) vom Peripheriemodul (1) Ergebnisdaten des Funktionstests entgegenzunehmen und die Ergebnisdaten mittels der Ausgabeeinrichtung (24) an den Benutzer (23) auszugeben.

24. Programmiergerät nach Anspruch 23, **dadurch gekennzeichnet, dass** das Programmiergerät in der Lage ist, die Ergebnisdaten an einen weiteren Rechner zu übermitteln.

25. Programmiergerät nach einem der Ansprüche 17 bis 24, **dadurch gekennzeichnet, dass** das Programmiergerät in der Lage ist, Programmdaten in einen dritten Speicherbereich (15) des Remanentspeichers (12) des Peripheriemoduls (1) einzuschreiben.

26. Programmiergerät nach einem der Ansprüche 17 bis 25, **dadurch gekennzeichnet, dass** das Programmiergerät in der Lage ist, den für den String (17) vorgesehenen ersten Speicherbereich (13) des Remanentspeichers (12) des Peripheriemoduls (1) über die vorkonfektionierte Schnittstelle (20) des Programmiergeräts (1), das Verbindungskabel (19) und die vorkonfektionierte Schnittstelle (4) des Peripheriemoduls (1) auszulesen, dass auf dem Programmiergerät zusätzlich zu der vorkonfektionierten Schnittstelle (20) mindestens eine weitere vorkonfektionierte Schnittstelle (29) angeordnet ist und dass das Programmiergerät in der Lage ist, den ausgelesenen Inhalt über die weitere vorkonfektionierte Schnittstelle (29) und ein weiteres Verbindungskabel (8) an eine Steuereinrichtung (5) des verteilten Steuerungssystems auszugeben.

## Claims

1. Operating method for a distributed control system,
- wherein the control system comprises a plurality of peripheral modules (1) embodied as sensor modules (1a) and a plurality of peripheral modules (1) embodied as motor modules (1b),
- wherein the peripheral modules (1) are connected to a control facility (5) directly or indirectly via a connection network (7) by way of interfaces (4) which are ready-made in a uniform manner and arranged on the peripheral modules (1),
- wherein the control facility (5), during normal operation of the control system, receives input variables (E) from peripheral modules (1) embodied as sensor modules (1a) by way of the respective ready-made interface (4) of the respective peripheral module (1), assigns the input variables (E) to the respective control task (SA), ascertains output variables (A) as a function of the input variables (E) assigned to the respective control task (SA) by processing the respective control task (SA) and transmits the ascertained respective output variables (A) to at least one peripheral module (1) assigned to the respective control task (SA) and embodied as a motor module (1b) by way of the respective ready-made interface (4) of the respective peripheral module (1)
- wherein, before a commissioning phase of the distributed control system, a string (17) is written into a first storage area (13) of a remanent storage device (12) of the respective peripheral module (1) by way of the ready-made interface (4) of the respective peripheral module (1),
and wherein the content stored in the remanent storage device (12) then also remains intact when the respective peripheral module (1) is disconnected from an energy supply,
wherein the string (17) is designed as an alphanumeric character string, and wherein the string (17) is defined by a user, and
- wherein the peripheral modules (1), as part of a commissioning phase of the control system preceding the normal operation, read out the string (17) from the first storage area (13) of the remanent storage device (12) of the respective peripheral module (1) and transmit this to the control facility (5) and
- wherein the control facility (5) autonomously ascertains the assignment of the peripheral modules (1) to the respective control task (SA) on the basis of the transmitted string (17) .

2. Operating method according to claim 1,
**characterised in that** the peripheral modules (1), as part of the commissioning phase of the control system, read out an address (18) which is specific for the respective peripheral module (1) from a second storage area (14) of the remanent storage device (12) of the respective peripheral module (1) and transmit the respective specific address (18) together with the respective string (17) to the control facility (5), that the peripheral modules (1) embodied as sensor modules (1a), during normal operation of the control system, transmit their respective input variables (E) together with their respective specific address (18) to the control facility (5) and that the control facility (5), during normal operation of the control system, transmits the respective output variables (A) together with the respective specific address (18) of the peripheral modules (1) embodied as motor modules (1b) to the respective peripheral module (1) embodied as motor module (1b).

3. Operating method according to claim 2,
**characterised in that** the addresses (18) have a considerably smaller length than the strings (17).

4. Operating method according to claim 2 or 3,
**characterised in** t**hat** the peripheral modules (1), after receiving a write command for the respective remanent storage device (12), check whether data is to be written into the respective second storage area (14) of the remanent storage device (12) of the respective peripheral module (1) by means of the write command by way of the ready-made interface (4), and refuse to execute the write command in this case.

5. Operating method according to claim 2 or 3,
**characterised in that** the peripheral modules (1), after receiving a write command for the respective remanent storage device (12), check whether data is to be written into the respective second storage area (14) of the remanent storage device (12) of the respective peripheral module (1) by means of the write command by way of the ready-made interface (4), and that the peripheral modules (1) only execute the write command when, in addition to the write command, a write code specifying the write permission is given to the respective peripheral module (1) by way of the ready-made interface (4), and otherwise refuse to execute the write command.

6. Operating method according to claim 5,
**characterised in that** the peripheral modules (1), after receiving a write command for the respective remanent storage device (12), check whether data is to be written into the respective first storage area (13) of the remanent storage device (12) of the respective peripheral module (1) by means of the write command by way of the ready-made interface (4), that the peripheral modules (1) only execute the write command when, in addition to the write command, a write code specifying the write permission is given to the respective peripheral module (1) by way of the ready-made interface (4), and otherwise refuse to execute the write command and that the write code for writing to the respective second storage area (14) has a higher protection level than the write code for writing to the respective first storage area (13).

7. Operating method according to one of the above claims,
**characterised in that** the control facility (5) compares the transmitted strings (17) with a list of strings given to the control facility (5) and that the control facility (5) outputs an error message when the transmitted strings deviate from the strings contained in the given list of strings.

8. Operating method according to one of the above claims,
**characterised in that** the strings (17) have a maximum permissible length and that the maximum permissible length is at least 32 characters.

9. Peripheral module for a distributed control system,
- wherein the peripheral module is embodied as sensor module (1a) or as motor module (1b),
- wherein arranged on the peripheral module is a ready-made interface (4), by way of which the peripheral module can be connected directly or indirectly to a control facility (5),
- wherein the peripheral module is embodied such that, during normal operation of the control system, it transmits input variables (E) to the control facility (5) of the control system by way of the ready-made interface (4), should it be embodied as sensor module (1a), and receives output variables (A) from the control facility (5) by way of the ready-made interface (4), should it be embodied as motor module (1b),
- wherein the peripheral module is embodied such that, as part of a commissioning phase of the control system preceding the normal operation, it reads out a string (17) from a first storage area (13) of a remanent storage device (12) of the peripheral module and transmits this to the control facility (5), wherein the string (17) is embodied as an alphanumeric character string, and wherein the string is defined by a user, and wherein the remanent storage device is designed such that the content stored in the remanent storage device then also remains intact when the respective peripheral module is disconnected from an energy supply, and
- wherein the peripheral module is embodied such that it is possible to write to the first storage area (13) by way of the ready-made interface (4) of the peripheral module.

10. Peripheral module according to claim 9,
**characterised in that** the peripheral module is embodied such that, as part of the commissioning phase of the control system, it reads out an address (18) which is specific for the peripheral module from a second storage area (14) of the remanent storage device (12) and transmits it together with the respective string (17) to the control facility (5), that during normal operation it transmits its respective input variables (E) together with its respective specific address (18) to the control facility (5), should it be embodied as sensor module (1a), and receives its output variables (A) from the control facility (5) together with the respective specific address (18), should it be embodied as motor module (1b).

11. Peripheral module according to claim 10,
**characterised in that** the address (18) has a considerably smaller length than the string (17).

12. Peripheral module according to claim 10 or 11,
**characterised in that** the peripheral module is embodied such that it is not possible to write to the second storage area (14) by way of the ready-made interface (4) .

13. Peripheral module according to claim 10 or 11,
**characterised in that** the peripheral module is embodied such that it is only possible to write to the second storage area (14) by way of the ready-made interface (4) when, in addition to a write command for writing to the second storage area (14), a write code specifying the write permission is given to the peripheral module.

14. Peripheral module according to claim 13,
**characterised in that** the peripheral module is embodied such that it is also only possible to write to the first storage area (13) by way of the ready-made interface (4) when, in addition to a write command for writing to the first storage area (13), a write code specifying the write permission is given to the peripheral module and that the write code for writing to the respective second storage region (14) has a higher protection level than the write code for writing to the respective first storage area (13).

15. Peripheral module according to one of claims 9 to 14,
**characterised in that** the string (17) has a maximum permissible length and that the maximum permissible length is greater than 32 characters.

16. Peripheral module according to one of claims 9 to 15,
**characterised in that** the peripheral module has a display facility (25), by way of which the string (17) stored in the first storage region (13) of the remanent storage device (12) of the peripheral module is displayed on a permanent or temporary basis.

17. Programming device for a peripheral module (1) of a distributed control system, which is embodied as sensor module (la) or as motor module (1b),
- wherein a ready-made interface (20) is arranged on the programming device, by way of which interface (20) the programming device can be connected to a corresponding interface (4) of the peripheral module (1) by means of a connecting cable (19),
- wherein the programming device has an input facility (22), by means of which a string (17) can be given to the programming device by a user (23) of the programming device,
- wherein the programming device has an output facility (24), by means of which the string (17) given to the programming device can be output to the user (23),
- wherein the programming device is embodied such that it writes the string (17) into a first storage area (13) of a remanent storage device (12) of the peripheral module (1) by way of the ready-made interfaces (4, 20) and the connecting cable (19) and wherein the content stored in the remanent storage device (12) then also remains intact when the respective peripheral module (1) is disconnected from an energy supply,
wherein the string (17) is designed as an alphanumeric character string, and wherein the string (17) can be defined by a user.

18. Programming device according to claim 17,
**characterised in that** the programming device has an integrated printer or can be connected to an external printer (26) and that the programming device is embodied such that it transmits a print request for printing the string (17) to the printer (26), forcibly coupled with the writing of the string (17) into the first storage area (13) of the remanent storage device (12) of the peripheral module (1).

19. Programming device according to claim 17 or 18,
**characterised in that** the programming device is able to read out the first storage area (13) of the remanent storage device (12) of the peripheral module (1) provided for the string (17) and to output its content to the user (23) by means of the output facility (24).

20. Programming device according to claim 19,
**characterised in that** the programming device buffers the read-out content and at a later point in time - regardless of whether or not the peripheral module (1) has been switched in the meantime - writes the read-out content as a string (17) into the first storage area (13) of the remanent storage device (12) of the peripheral module (1), which has been connected to the programming device at a later point in time, by way of the ready-made interfaces (4, 20) and the connecting cable (19).

21. Programming device according to one of claims 17 to 20,
**characterised in that** the programming device is able to read out data, which is stored in a second storage area (14) of the remanent storage device (12) of the peripheral module (1), by way of the ready-made interfaces (4, 20) and the connecting cable (19) and to output the data to the user (23) by means of the output facility (24).

22. Programming device according to claim 21,
**characterised in that** the programming device is able to transmit the read-out data to a further computer.

23. Programming device according to one of claims 17 to 22,
**characterised in that** the programming device is able to initiate a functional testing of the peripheral module (1) by way of the ready-made interfaces (4, 20) and the connecting cable (19), to receive result data of the functional testing from the peripheral module (1) by way of the ready-made interfaces (4, 20) and the connecting cable (19) and to output the result data to the user (23) by means of the output facility (24).

24. Programming device according to claim 23,
**characterised in that** the programming device is able to transmit the result data to a further computer.

25. Programming device according to one of claims 17 to 24,
**characterised in that** the programming device is able to write program data into a third storage area (15) of the remanent storage device (12) of the peripheral module (1) .

26. Programming device according to one of claims 17 to 25,
**characterised in that** the programming device is able to read out the first storage area (13) of the remanent storage device (12) of the peripheral module (1) provided for the string (17) by way of the ready-made interface (20) of the programming device (1), the connecting cable (19) and the ready-made interface (4) of the peripheral module (1), that at least one further ready-made interface (29) is arranged on the programming device in addition to the ready-made interface (20) and that the programming device is able to output the read-out content to a control facility (5) of the distributed control system by way of the further ready-made interface (29) and a further connecting cable (8).

## Revendications

1. Procédé pour faire fonctionner un système de commande réparti,
- dans lequel le système de commande comprend une pluralité de modules (1) périphériques, constitués sous la forme de modules (1a) de capteur et une pluralité de modules (1) périphériques, constitués sous la forme de modules (1b) de moteur,
- dans lequel les modules (1) périphériques sont reliés à un dispositif (5) de commande, directement ou indirectement, par l'intermédiaire d'un réseau (7) de liaison, par des interfaces (4), pré-confectionnées unitairement et mises sur les modules (1) périphériques,
- dans lequel le dispositif (5) de commande reçoit, dans un fonctionnement normal du système de commande, des grandeurs (E) d'entrée, de modules (1) périphériques constitués en modules (1a) de capteur, par les interfaces (4) pré-confectionnées, respectivement, du module (1) périphérique respectif, associe les grandeurs (E) d'entrée à la tâche (SA) de commande respective, détermine, en fonction des grandeurs (E) d'entrée associées à la tâche (SA) de commande respective par élaboration de la tâche (SA) de commande respective, des grandeurs (A) de sortie respectives, et transmet les grandeurs (A) de sortie respectives déterminées, par l'interface (4) pré-confectionnée respective du module (1) périphérique respectif, à au moins un module (1) périphérique, constitué comme module (1b ) de moteur, associé à la tâche (SA) de commande respective,
- dans lequel, avant la phase de mise en service du système de commande réparti, on écrit, par l'interface (4) pré-confectionnée du module (1) périphérique respective, une séquence (17) dans une première partie (13) d'une mémoire (12) rémanente du module (1) périphérique respectif,
et dans lequel le contenu mis en mémoire dans la mémoire (12) rémanente reste conservé, même si on sépare le module (1) périphérique respectif de l'alimentation en énergie,
la séquence (17) étant conformée sous la forme d'une chaîne de caractères alphanumériques et la séquence (17) étant définie par un utilisateur, et
- dans lequel les modules (1) périphériques lisent, dans le cadre d'une phase de mise en service précédant le fonctionnement normal du système de commande, la séquence (17), dans la première partie (13) de la mémoire (12) rémanente du module (1) périphérique respectif et la transmet au dispositif (5) de commande, et
- dans lequel le dispositif (5) de commande détermine, à l'aide de la séquence (17) transmise, automatiquement l'association des modules (1) périphériques à la tâche (SA) de commande respective.

2. Procédé suivant la revendication 1, **caractérisé en ce que** les modules (1) périphériques, lisent, dans le cadre de la phase de mise en service du système de commande, dans une deuxième partie (14) de la mémoire (12) rémanente du module (1) périphérique respectif, une adresse (18) spécifique pour le module (1) périphérique respectif et transmettent l'adresse (18) spécifique respective, ensemble avec la séquence (17) respective, au dispositif (5) de commande, **en ce que** les modules (1) périphériques, constitués en modules (1a) de capteur, transmettent, en fonctionnement normal du système de commande, leurs grandeurs (E) d'entrée respectives, ensemble avec leurs adresses (18) spécifiques respectives, au dispositif (5) de commande et **en ce que** le dispositif (5) de commande transmet au module (1) périphérique respectif constitué en module (1b) de moteur, en fonctionnement normal du système de commande, les grandeurs (A) de sortie respectives, ensemble avec l'adresse (18) spécifique respective des modules (1) périphériques constitués en modules (1b) de moteur.

3. Procédé suivant la revendication 2, **caractérisé en ce que** les adresses (18) ont une longueur nettement plus petite que la séquence (17).

4. Procédé suivant la revendication 2 ou 3, **caractérisé en ce que** les modules (1) périphériques contrôlent, après la réception d'une instruction d'écriture pour la mémoire (12) rémanente respective, si on doit écrire, au moyen de l'instruction d'écriture, par l'intermédiaire de l'interface (4) pré-confectionnée, des données dans la deuxième partie (14) respective de la mémoire (12) rémanente du module (1) périphérique respectif, et refusent dans ce cas d'exécuter l'instruction d'écriture.

5. Procédé suivant la revendication 2 ou 3, **caractérisé en ce que** les modules (1) périphériques contrôlent, après la réception d'une instruction d'écriture pour la mémoire (12) rémanente respective, s'il faut écrire, au moyen de l'instruction d'écriture, par l'intermédiaire de l'interface (4) pré-confectionnée, des données dans la deuxième partie (14) respective de la mémoire (12) rémanente du module (1) périphérique respectif et **en ce que** les modules (1) périphériques n'exécutent l'instruction d'écriture que lorsque l'on prescrit, aux modules (1) périphériques respectifs, par l'interface (4) pré-confectionnée, en plus de l'instruction d'écriture, un code d'écriture spécifiant l'autorisation d'écrire et, sinon, refusent d'exécuter l'instruction d'écriture.

6. Procédé suivant la revendication 5, **caractérisé en ce que** les modules (1) périphériques contrôlent, après la réception d'une instruction d'écriture pour la mémoire (12) rémanente respective, si l'on doit écrire, au moyen de l'instruction d'écriture, par l'intermédiaire de l'interface (4) pré-confectionnée, des données dans la première partie (13) respective de la mémoire (12) rémanente du module (1) périphérique respectif, **en ce que** les modules (1) périphériques n'exécutent l'instruction d'écriture que lorsque l'on a prescrit aux modules (1) périphériques respectifs, par l'intermédiaire de l'interface (4) pré-confectionnée, en plus de l'instruction d'écriture, un code d'écriture spécifiant l'autorisation d'écrire et, sinon, refusent d'exécuter l'instruction d'écriture, et **en ce que** le code d'écriture a, pour l'écriture dans la deuxième partie (14) respective de mémoire, un niveau de protection plus haut que le code d'écriture pour écrire dans la première partie (13) respective de la mémoire.

7. Procédé suivant l'une des revendications précédentes, **caractérisé en ce que** le dispositif (5) de commande compare les séquences (17) transmises à une liste de séquences donnée à l'avance au dispositif (5) de commande et **en ce que** le dispositif (5) de commande émet un message d'erreur, si les séquences transmises s'écartent des séquences contenues dans la liste donnée à l'avance de séquences.

8. Procédé suivant l'une des revendications précédentes, **caractérisé en ce que** les séquences (17) ont une longueur admissible au maximum et **en ce que** la longueur admissible au maximum est d'au mois 32 caractères.

9. Module périphérique d'un système de commande réparti,
- dans lequel le module périphérique est constitué en module (1a) de capteur ou en module (1b) de moteur,
- dans lequel, sur le module périphérique est mise une interface (4) pré-confectionnée, par laquelle le module périphérique peut être relié directement ou indirectement à un dispositif (5) de commande,
- dans lequel le module périphérique est constitué de manière à transmettre, dans un fonctionnement normal du système de commande, par l'interface (4) pré-confectionnée, des grandeurs (E) d'entrée au dispositif (5) de commande du système de commande, s'il est constitué en module (1a) de capteur, et à recevoir, par l'interface (4) pré-confectionnée du dispositif (5) de commande, des grandeurs de sortie, s'il est constitué en module (1b) de moteur,
- dans lequel le module périphérique est constitué de manière à lire, dans le cadre d'une phase de mise en service précédent le fonctionnement normal du système de commande, une séquence (17) dans une première partie (13) d'une mémoire (12) rémanente du module périphérique et à la transmettre au dispositif (5) de commande, la séquence (17) étant constituée d'une chaîne de caractères alphanumériques et la séquence étant définie par un utilisateur et la mémoire rémanente étant conformée de manière à ce que le contenu mis en mémoire dans la mémoire rémanente reste conservé aussi lorsque le module périphérique respectif est séparé d'une alimentation en énergie,
- dans lequel le module périphérique est constitué de manière à ce que l'on puisse écrire dans la première partie (13) de la mémoire, par l'intermédiaire de l'interface (4) pré-confectionnée du module périphérique.

10. Module périphérique suivant la revendication 9, **caractérisé en ce que** le module périphérique est constitué de manière à lire, dans le cadre de la phase de mise en service du système de commande, dans une deuxième partie (14) de la mémoire (12) rémanente, une adresse (18) spécifique au module périphérique et à la transmettre, ensemble avec la séquence (17), au dispositif (5) de commande, à transmettre, en fonctionnement normal, ses grandeurs (E) d'entrée respectives, ensemble avec son adresse (18) spécifique respective, au dispositif (5) de commande, s'il est constitué en module (1a) de capteur, et à recevoir du dispositif (5) de commande ses grandeurs (A) de sortie, ensemble avec l'adresse (18) spécifique respective, s'il est constitué en module (1b) de moteur.

11. Module périphérique suivant la revendication 10, **caractérisé en ce que** l'adresse (18) a une longueur considérablement plus petit que la séquence (17).

12. Module périphérique suivant la revendication 10 ou 11, **caractérisé en ce que** le module périphérique est constitué de manière à ne pas pouvoir écrire dans la deuxième partie (14) de la mémoire par l'interface (4) pré-confectionnée.

13. Module périphérique suivant la revendication 10 ou 11, **caractérisé en ce que** le module périphérique est constitué de manière à ne pouvoir écrire dans la deuxième partie (14) de la mémoire, par l'intermédiaire de l'interface (4) pré-confectionnée, que lorsqu'il est prescrit au module périphérique, en plus d'une instruction d'écriture pour écrire dans la deuxième partie (14) de la mémoire, un code d'écriture spécifiant l'autorisation d'écriture.

14. Module périphérique suivant la revendication 13, **caractérisé en ce que** le module périphérique est constitué de manière à ce que l'on puisse écrire aussi dans la première partie (13) de la mémoire, par l'intermédiaire de l'interface (4) pré-confectionnée, seulement lorsque l'on a prescrit au module périphérique, en plus d'une instruction d'écriture pour écrire dans la première partie (13) de la mémoire, un code d'écriture spécifiant une autorisation d'écriture et **en ce que** le code d'écriture pour écrire dans la deuxième partie (14) respective de la mémoire a un niveau de protection plus haut que le code d'écriture pour écrire dans la première partie (13) respective de la mémoire.

15. Module périphérique suivant l'une des revendications 9 à 14, **caractérisé en ce que** les séquences (17) ont une longueur admissible au maximum et **en ce que** la longueur admissible au maximum est d'au mois 32 caractères.

16. Module périphérique suivant l'une des revendications 9 à 15, **caractérisé en ce que** le module périphérique a un dispositif (25) d'affichage, par lequel la séquence (17), mise en mémoire dans la première partie (13) de la mémoire (12) rémanente du module périphérique, est affichée en permanence ou temporairement.

17. Appareil de programmation d'un module (1) périphérique d'un système de commande réparti, constitué sous la forme d'un module (1a) de capteur ou d'un module (1b) de moteur,
- dans lequel il est mis, sur l'appareil de programmation, une interface (20) pré-confectionnée, par laquelle l'appareil de programmation peut être, au moyen d'un câble (19) de liaison, relié à une interface (4) correspondante du module (1) périphérique,
- dans lequel l'appareil de programmation a un dispositif (22) d'entrée, au moyen duquel une séquence (17) peut être prescrite à l'appareil de programmation par un utilisateur (23) de l'appareil de programmation,
- dans lequel l'appareil de programmation a un dispositif (24) de sortie, au moyen duquel la séquence (17) donnée à l'avance à l'appareil de programmation peut être donnée à l'utilisateur (23),
- dans lequel l'appareil de programmation est constitué de manière à pouvoir écrire la séquence (17), par l'intermédiaire des interfaces (4, 20) pré-confectionnées et du câble (19) de liaison, dans une première partie (13) d'une mémoire (12) rémanente du module (1) périphérique et dans lequel le contenu mis en mémoire dans la mémoire (12) rémanente reste conservé également lorsque le module (1) périphérique respectif est séparé d'une alimentation en énergie,
la séquence (17) étant conformée en chaîne de caractères alphanumériques et la séquence (17) pouvant être définie par un utilisateur.

18. Appareil de programmation suivant la revendication 17, **caractérisé en ce que** l'appareil de programmation a une imprimante intégrée ou peut être relié à une imprimante (26) extérieure et **en ce que** l'appareil de programmation est constitué de manière à transmettre en couplage, de manière forcée, avec l'écriture de la séquence (17) dans la première partie (13) de la mémoire (12) rémanente du module (1) périphérique, une instruction d'impression pour imprimer la séquence (17) sur l'imprimante (26).

19. Appareil de programmation suivant la revendication 17 ou 18, **caractérisé en ce que** l'appareil de programmation est en mesure de lire dans la première partie (13), prévue pour la séquence (17), de la mémoire (12) rémanente du module (1) périphérique, et de donner son contenu à l'utilisateur (23) au moyen du dispositif (24) de sortie.

20. Appareil de programmation suivant la revendication 19, **caractérisé en ce que** l'appareil de programmation met en mémoire tampon le contenu qu'il a lu et écrit le contenu lu à un instant ultérieur - indépendamment du point de savoir si, intermédiairement, le module (1) périphérique a été remplacé ou non - comme séquence (17), par l'intermédiaire des interfaces (4, 20) pré-confectionnées et du câble (19) de liaison dans la première partie (13) de la mémoire (12) rémanente du module (1) périphérique relié à l'instant ultérieur à l'appareil de programmation.

21. Appareil de programmation suivant l'une des revendications 17 à 20, **caractérisé en ce que** l'appareil de programmation est en mesure, par l'intermédiaire des interfaces (4, 20) pré-confectionnées et du câble (19) de liaison, de lire des données, qui sont mises en mémoire dans une deuxième partie (14) de la mémoire (12) rémanente du module (1) périphérique, et de donner à l'utilisateur (23) les données au moyen du dispositif (24) de sortie.

22. Appareil de programmation suivant la revendication 21, **caractérisé en ce que** l'appareil de programmation est en mesure de transmettre les données lues à un autre ordinateur.

23. Appareil de programmation suivant l'une des revendications 17 à 22, **caractérisé en ce que** l'appareil de programmation est en mesure, par l'intermédiaire des interfaces (4, 20) pré-confectionnées et du câble (19) de liaison, de lancer un test de fonctionnement du module (1) périphérique, de recevoir, par l'intermédiaire des interfaces (4, 20) pré-confectionnées et du câble (19) de liaison du module (1) périphérique, des données de résultat du test de fonctionnement et de donner à l'utilisateur (23) les données de résultat au moyen du dispositif (24) de sortie.

24. Appareil de programmation suivant la revendication 23, **caractérisé en ce que** l'appareil de programmation est en mesure de transmettre les données de résultat à un autre ordinateur.

25. Appareil de programmation suivant l'une des revendications 17 à 24, **caractérisé en ce que** l'appareil de programmation est en mesure d'écrire des données de programme dans une troisième partie (15) de la mémoire (12) rémanente du module (1) périphérique.

26. Appareil de programmation suivant l'une des revendications 17 à 25, **caractérisé en ce que** l'appareil de programmation est en mesure de lire, par l'intermédiaire de l'interface (20) pré-confectionnée de l'appareil (1) de programmation, du câble (19) de liaison et de l'interface (4) pré-confectionnée du module (1) périphérique, dans la première partie (13), prévue pour la séquence (17), de la mémoire (12) rémanente du module (1) périphérique, **en ce que**, sur l'appareil de programmation, est mis, en plus de l'interface (20) pré-confectionnée, au moins une autre interface (29) pré-confectionnée et **en ce que** l'appareil de programmation est en mesure de donner le contenu lu à un dispositif (5) de commande du système de commande réparti, par l'intermédiaire de l'autre interface (29) pré-confectionnée et d'un autre câble (8) de liaison.
